# EUROPÄISCHE PATENTSCHRIFT

(11) **EP 2 612 173 B1**
(45) Veröffentlichungstag und Bekanntmachung des Hinweises auf die Patenterteilung: **18.09.2024**
(21) Anmeldenummer: 11738221.8
(22) Anmeldetag: 28.07.2011
(51) Int. Cl.: G01V 3/08

(54) **VERFAHREN ZUR LOKALISIERUNG VON IN EINEM MEDIUM EINGESCHLOSSENEN OBJEKTEN, SOWIE MESSGERÄT ZUR DURCHFÜHRUNG DES VERFAHRENS**
METHOD FOR LOCALIZING OBJECTS ENCLOSED IN A MEDIUM, AND MEASURING DEVICE FOR CARRYING OUT THE METHOD
PROCÉDÉ POUR LOCALISER DES OBJETS INCLUS DANS UN MILIEU, ET APPAREIL DE MESURE SERVANT À LA MISE EN OEUVRE DE CE PROCÉDÉ

(30) Priorität: 30.08.2010 DE 102010039953
(43) Veröffentlichungstag der Anmeldung: 10.07.2013
(73) Patentinhaber: Robert Bosch GmbH, 70442 Stuttgart (DE)
(72) Erfinder: KRAPF, Reiner, 70794 Filderstadt (DE); ZIBOLD, Tobias, 70567 Stuttgart (DE); ALBRECHT, Andrej, 70567 Stuttgart (DE)
(86) Internationale Anmeldenummer: PCT/EP2011/063051
(87) Internationale Veröffentlichungsnummer: WO 2012/028400

(56) Entgegenhaltungen:
- DE-A1- 102004 007 077
- US-A- 5 955 982
- US-A1- 2004 000 918
- US-A1- 2007 210 785
- US-A1- 2008 036 644
- US-A1- 2008 110 038
- US-A1- 2008 129 276
- US-A1- 2010 186 504

## Beschreibung

Die Erfindung betrifft ein Verfahren zur Lokalisierung von in einem Medium eingeschlossenen Objekten nach dem Oberbegriff des Anspruchs 1 sowie einem Messgerät, insbesondere ein handhaltbares Ortungsgerät, zur Durchführung des Verfahrens, nach Anspruch 11.

### Stand der Technik

Zur Detektion von in einem Medium, wie bspw. einer Wand, einer Decke oder einem Boden eingeschlossenen Objekten, wie bspw. elektrischen Leitungen, Wasserleitungen, Rohren, Metallständern oder auch Holzbalken, werden seit längerer Zeit Ortungsgeräte eingesetzt. Dabei finden unter anderem induktive Geräte, d.h. Geräte, die ein Magnetfeld erzeugen, welches durch die in einem Medium eingeschlossenen, metallischen Gegenstände gestört wird, Verwendung. Neben diesen induktiven Geräten werden des Weiteren kapazitive Geräte, Netzspannungsdetektoren sowie Hochfrequenzdetektoren verwendet. Bei Netz-spannungsdetektoren oder auch AC-Detektoren wird lediglich ein Empfangs-leiterschleifensystem verwendet, um das gewünschte Signal zu detektieren und damit ein entsprechendes Objekt zu lokalisieren.

Die Anzeige, ob ein Sensor ein Objekt detektiert, wird meistens über LEDs, Segment-LCDs und/oder Grafikdisplays realisiert. Typischerweise wird bei Messsystemen dieser Art eine Anzeige, die den Verlauf der Signalstärke des Sensors wiedergibt, verwendet. Das heißt, das erhaltene Sensorsignal wird als Ausgabesignal, beispielsweise in Form einer Balkenanzeige oder einer LED-Reihe dem Benutzer/Anwender angezeigt. Somit kann dieser die Lage eines Objektes detektieren, indem er die Stelle mit dem maximalen Ausschlag der LED-Reihe /

Balkenanzeige mit dem Gerät sucht.

Es gibt auch einfachere Geräte mit nur einer LED, die eine feste Schwelle für die Signalstärke besitzen. Die LED wird geräteseitig angeschaltet, wenn das Sensorsignal einen bestimmten, voreingestellten Wert überschreitet. Dabei gibt es auch Geräte, welche keine feste Schwelle, sondern eine vom Benutzer veränderliche Schwelle verwenden, d.h. der Benutzer stellt an einem Stellrad die "Empfindlichkeit" ein, wobei dies die Schwelle des Sensorsignals ist, bei der die Warnlampe/LED des Gerätes aufleuchtet.

Aus der US 2008/110038 A1 ist eine Wasserwaage mit einem Sensor zur Detektion von in einem Werkstück verborgenen Einschlüssen bekannt. Die Wasserwaage der US 2008/011038 A1 besitzt eine Anzeigeeinheit mit drei farblich unterschiedlichen Leuchtelementen, um einem Anwender die Informationen *"Objekt detektiert"* (= grün), "*Objekt nahe an der Detektionsschwelle*" (= gelb) sowie "*Objekt nicht detektiert*" (= rot) zu übermitteln.

Aus der US2004/0000918 A1 ist ein Verfahren und ein Gerät zur Detektion von verborgenden Objekten bekannt, welches in einer Ausführungsform drei LEDs unterschiedlicher Farbe aufweist. Neben der Anzeige, dass ein Objekt detektiert wurde und der Anzeige, dass sich das Gerät über einer Kante des Objektes befindet, weist die Vorrichtung der US2004/0000918 A1 eine Anzeige für den Fall auf, dass das Messgerät in Richtung auf ein Objekt verschoben wird.

US 2007/210785 A1 offenbart ein Detektionsgerät, um Objekte hinter Wänden zu bestimmen. Das Detektionsgerät weist ein Gehäuse mit einer Oberfläche auf, die dazu ausgebildet ist, über eine Wand bewegt zu werden. Weiter weist das Detektionsgerät einen kapazitiven Sensor auf. Aus der US 5 955 982 A ist ein Verfahren bekannt, mit dem Opfer von Lawinen gesucht werden können. Dabei tragen die Opfer von Lawinen Radiosender, die kontinuierlich Signale auf Standardfrequenzen senden.

Des Weiteren gibt es Geräte (z.B. *"DMF 10 Zoom"* der Firma Bosch) die den Benutzer nicht bzw. nicht nur über eine LCD-Anzeige oder LED-Reihe oder eine einzelne LED über das Vorhandensein von eingeschlossenen Objekten informieren, sondern über eine LED, welche die Farbe ändert. So variiert das oben angesprochene *"DMF 10 Zoom"* die Farbe einer Ausgabeeinheit von grün auf rot, sobald ein Objekt gefunden wurde. Ein derartiges System ist aus der DE 10 2004 011 285 A1 bekannt.

Außer durch eine feste Signalschwelle, bei der eine LED einer Ausgabeeinheit aktiviert wird, d.h. beispielsweise ein Farbumschlag wie bei der DE 10 2004 011 285 A1 erfolgt, kann auch eine fließende (adaptive) Schwelle verwendet werden, die die Anzeige und/oder LED nur im Bereich des Signalmaximums des Sensorsignals aktiviert, was die "Trennschärfe" der Objektlokalisierung erhöht. Ein solches System ist beispielsweise aus der DE 10 2005 015325 A1 bekannt

### Offenbarung der Erfindung

Bei dem erfindungsgemäßen Verfahren zur Lokalisierung von in einem Medium eingeschlossenen Objekten wird ein Messsignal generiert, welches es ermöglicht, Informationen über die Lage des eingeschlossenen Objektes zu gewinnen. Dieses Signal ist beispielsweise eine in einem Empfangsleiterschleifensystem eines Sensors eines nach dem erfindungsgemäßen Verfahren arbeitenden Messgerätes induzierte Spannung. Über die relative Signalstärke kann dabei ein eingeschlossenes Objekt detektiert und auch lokalisiert werden.

Aus dem so gewonnenen Messsignal, welches Informationen über die Lage des eingeschlossenen Objektes besitzt, wird ein Ausgabesignal Z (Zustandssignal) erzeugt, welches einem Anwender des erfindungsgemäßen Verfahrens bzw. eines nach diesen Verfahren arbeitenden Messgerätes die Unterscheidung zwischen zumindest drei Detektionszuständen bei der Lokalisierung ermöglicht. So erzeugt das erfindungsgemäße Verfahren ein erstes Signal Z=a, welches dem Zustand *"Objekt detektiert"* entspricht. Über ein zweites Signal Z=b, welches ebenfalls aus dem Messsignal generiert wird, kann ein zweiter Zustand *"kein Objekt detektiert"* unterschieden werden.

In vorteilhafter Weise wird bei dem erfindungsgemäßen Verfahren auch ein dritter Zustand Z=c mit der Aussage *"Objekt in der Nähe"* erzeugt. In vorteilhafter Weise sind damit drei "Warnstufen" im Gerät vorhanden, die das Gefahrenniveau der Messsituation widerspiegeln. Insbesondere handelt es sich um diskrete Warnstufen und um genau drei Warnstufen, denen jeweils ein eindeutiger Sinngehalt zugeordnet ist. Dies ist nicht zu verwechseln mit einem lediglich ansteigenden Messsignal, welches einem Nutzer signalisiert, dass sich das Messgerät auf ein Objekt zu bewegt, ein solches also auch dann irgendwo in der Nähe sein muss. Bei dem erfindungsgemäßen Verfahren gibt es drei konkrete, diskrete Zustände, zischen denen umgeschaltet wird.

So ist ein nicht zu unterschätzender Nachteil einer direkten Änderung von Zustand *"kein Objekt detektiert"* auf den Zustand *"ein Objekt detektiert"* bei der Verwendung eines Systems mit einer adaptiven Schwelle, wie dies oben im Zusammenhang mit der DE 10 2005 015325 A1 angesprochen wurde, die Tatsache, dass die Ausgabeeinheit, beispielsweise eine LED bei derartigen Geräten "grün" zeigen kann ("kein Objekt detektiert"), obwohl man sich über einem Objekt befindet, wenn dieses Objekt kleiner ist, als ein nebenliegendes, stärkeres Objekt, da sich die dynamische Schwelle für die Zustandsänderung an dem großen Objekt orientiert. Der Verwender könnte die "grüne" Anzeige ("*kein Objekt detektiert"*) missverstehen und in ein verborgenes Objekt, beispielsweise eines Wasserleitung, hineinbohren.

Nachteil einer direkten Änderung von Zustand *"kein Objekt detektiert"* auf den Zustand "ein Objekt detektiert" bei einem Verfahren mit einer fixen, voreingestellten Schwelle ist die Tatsache, dass das Gerät über einen sehr großflächigen Bereich vor einem Objekt warnt und die exakte Lokalisierung des eingeschlossenen Objektes kaum noch möglich ist. (Ähnlich wie dies beispielsweise bei "Lowcost-Geräten" des Öfteren beobachtet wird).

Der zusätzlich Zustand Z=c ("*Objekt in der Nähe*") ermöglicht es in vorteilhafter Weise, dass die Detektionsschwelle, unterhalb deren die Zustandsinformation *"kein Objekt detektiert"* aus gegeben wird, sehr gering gewählt werden kann, ohne dass es andererseits bei starken Sig nalen dann zu einem deutlichen und nicht mehr vertretbaren Übersteuern kommt, bei den eine genaue Lokalisierung eines einzelnen Objektes nicht mehr möglich wäre.

Das erfindungsgemäße Verfahren, bzw. ein nach diesem Verfahren arbeitendes Messgerä vermittelt einem Anwender/Benutzer in vorteilhafter Weise, ob er sich nicht über einem Objekt in der Nähe eines Objektes oder direkt über einem Objekt befindet. In den beiden letzterer Fällen wird dem Benutzer deutlich signalisiert, dass ein Bohren hier gefährlich ist bzw. seir könnte. In vorteilhafter Weise sind zumindest drei "Warnstufen" im Gerät vorhanden, die das Gefahrenniveau der Messsituation widerspiegeln. In den Ausführungsformen der Erfindung sind genau drei Warnstufen vorgesehen, die mit einer klaren, eindeutigen Aussage für einen Anwender / Benutzer verbunden sind.

Mit den erfindungsgemäßen drei Zustands- bzw. Warnstufen wird ein Anwender / Benutzer sicher gewarnt, wenn es gefährlich sein könnte und es wird ihm insbesondere durch eine Zu standsinformation die exakte Position des Objektes mitgeteilt.

Ein weitere Vorteil der zumindest drei Zustands- bzw. Warnstufen ist, dass ein nach dem erfindungsgemäßen Verfahren arbeitendes Messgerät einem Anwender / Benutzer klar an zeigt, wie sich der Verwender verhalten soll:
- Zustand Z=b: "Kein Objekt detektiert": z.B. grüne LED-Anzeige:
   Bohren unkritisch und erlaubt.
- Zustand Z=c: "Objekt in der Nähe": z.B. gelbe LED-Anzeige:
   Vorsicht geboten, Bohren nur erlaubt, wenn auch andere Informationsquellen, wie beispielsweise Baupläne oder andere Messgeräte hinzugezogen werden.
- Zustand Z=a: "Objekt detektiert": z.B. rote LED-Anzeige:
   Objekt direkt unter dem Gerät. Identifizierung der Mitte des Objektes. Die exakte Lokalisierung des Objektes ist somit möglich.

Durch die in den abhängigen Ansprüchen aufgeführten Merkmale sind vorteilhafte Weiterbildungen des erfindungsgemäßen Lokalisierungsverfahrens möglich.

In vorteilhafter Weise wird bei dem erfindungsgemäßen Verfahren von dem ersten Zustand *"Objekt detektiert"* auf den dritten Zustand *"Objekt in der Nähe"* gewechselt wird, falls die Größe des aktuell gemessenen Messsignals einen Schwellwert Uu unterschreitet. In vorteilhafter Weise ist kann dieser Schwellwert dynamisch definiert sein. So kann bei dem erfindungsgemäßen Verfahren von dem ersten Zustand *"Objekt detektiert"* auf den dritten Zustand *"Objekt in der Nähe"* gewechselt werden, falls die Größe des aktuell gemessenen Messsignals den Wert eines zuvor gemessenen, lokalen Maximalwert des Messsignals um einen vorgegebenen ersten Prozentsatz unterschreitet.

Geräte des Standes der Technik übermitteln typischerweise die Information, dass ein Objekt detektiert worden ist, falls das Messsignal eine vorgegebene Messsignal-Schwelle zur Objekterkennung überschreitet. Eine solche feste Messsignal-Schwelle hat zur Folge, dass für den Fall, dass das Messsignal eines Objektes unterhalb dieser Schwelle liegt, kein Objekt erkannt werden kann. Handelt es sich jedoch um ein Objekt mit sehr großem Messsignal, bei dem diese feste Messsignal-Schwelle bereits sehr frühzeitig, dass heißt beispielsweise in großer Entfernung von dem zu lokalisierenden Objekt überschritten wird, kann ein Objekt zwar erkannt aber nicht besonders genau lokalisiert werden.

Das erfindungsgemäße Verfahren begrenzt nunmehr den Zustand (Z=a) *"Objekt detektiert",* der einem Anwender mitteilt, dass ein Objekt lokalisiert worden ist, auf eine relative Signalstärke in Bezug auf ein zuvor bei dem selben Messvorgang gemessenes Messsignal-Maximum. Wird ein Messsignal-Maximum detektiert, welches typischerweise mit der Lokalisierung eines eingeschlossenen Objektes einhergeht, so wird der Distanzbereich der dem lokalisierten, d.h. detektierten, eingeschlossenen Objekt zugeordnet wird, dadurch begrenzt, dass das gemessene Messsignal einen definierten Prozentsatz des zuvor gemessenen Messsignal-Maximums unterschreitet.

Auf diese Weise ist es beispielsweise möglich, dicht beieinander angeordnete Objekte zu differenzieren, die bei einer konstanten Messsignal-Schwelle zu einem Signal führen würden, welches über den gesamten Bereich der beiden eingeschlossenen Objekte oberhalb der Messsignalschwelle liegen würde.

Mit dem erfindungsgemäßen Verfahren wird daher in vorteilhafter Weise, auch eine genaue Lokalisierung von in einem Medium eingeschlossenen Objekten gewährleistet.

Andererseits wird bei dem erfindungsgemäßen Verfahren von dem dritten Zustand "*Objekt in der Nähe"* (Z=c) auf den zweiten Zustand *"kein Objekt detektiert"* (Z=b) erst gewechselt, falls die Größe des aktuell gemessenen Messsignals einen vorgebbaren ersten Schwellwert unterschreitet. Dieser erste Schwellwert ist das Signalrauschniveau des Detektionssystems. Das erfindungsgemäße Verfahren zur Lokalisierung von Objekten verfügt in dieser Ausführungsform vorzugsweise über einen relativ geringen ersten Schwellwert. Nur oberhalb dieses Schwellwertes kann ein Objekt als solches überhaupt erkannt und somit lokalisiert werden.

Auf dieser Weise kann ein Anwender/Benutzer sicher sein, dass bei dem Zustand Z=b *"kein Objekt detektiert"* wirklich kein Objekt am Ort des Messpunktes vorliegt. Fehlmessungen von dynamischen Systemen, wie sie oben beschrieben sind, lassen sich so nahezu vollständig vermeiden.

Im umgekehrten Fall wird bei dem erfindungsgemäßen Verfahren von dem zweiten Zustand *"kein Objekt detektiert"* (Z=b) auf den dritten Zustand *"Objekt in der Nähe"* (Z=c) gewechselt wird, falls die Größe des aktuell gemessenen Messsignals einen vorgebbaren ersten Schwellwert, beispielsweise den Schwellwert des Rauschlevel (U_{SR}) des Detektionssystem, überschreitet.

Bei dem erfindungsgemäßen Verfahren wird von dem dritten Zustand *"Objekt in der Nähe"* (Z=c) auf den ersten Zustand (Z=a) *"Objekt detektiert"* gewechselt, falls die Größe des aktuell gemessenen Messsignals (U_{M}) einen vorgebbaren zweiten Schwellwert (Uᵤ) überschreitet. Der vorgebbare zweite Schwellwert (U_{U}) kann dabei vorteilhafter Weise einem zuvor gemessenen, lokalen Minimalwert (U_{Mi,n}) des Messsignals erhöht um einen vorgegebenen zweiten Prozentsatz P₂ entsprechen.

In vorteilhafter Weise kann die Übermittlung eines Zustandes Z (Z=a, Z=b, Z=c) an einen Anwender/Benutzer mittels eines Farbcodes, insbesondere mittels unterschiedlicher Farben, erfolgt. So kann die Übermittlung des jeweiligen Detektionszustandes Z (Z=a, Z=b, Z=c) an einen Anwender insbesondere mittels dreier unterschiedlicher Farben erfolgen. So ist es beispielsweise vorteilhaft, dem Zustand "Objekt in der Nähe" (Z=c) einen gelben Farbton zuzuordnen.

Wenn man die genau drei Warnstufen analog einer Ampel gestaltet (rot (Z=a); gelb (Z=c) ; grün (Z=b)) ist eine solche Zustandsübermittlung / Anzeige auch weltweit intuitiv erfassbar und selbsterklärend. Dabei können die drei Farben separat (pro Farbe eine diskrete LED) oder aber durch eine einzige optische Anzeige realisiert sein, welche die Farbe wechselt (Dual- oder Multi-Farb-LEDs) oder durch einen Diffuser, der das Licht der LEDs mischt und so die Farben erzeugt (z.B. rote und grüne LED ergeben bei gleichzeitigem Betrieb hinter einem Diffuser die Mischfarbe gelb). Dies wäre insbesondere kostengünstig zu realisieren.

Selbstverständlich muss die Übermittlung des Detektionszustandes Z an einen Anwender/Benutzer nicht (rein) optisch erfolgen, sondern kann beispielsweise auch durch eine akustische Warnung über einen Lautsprecher oder beispielsweise auch einem sogenannten "Piepser" nach demselben Prinzip, beispielsweise mit einer aufsteigenden Tonfolge, erfolgen.

Statt Farben oder Tönen könnte auch eine Sprachausgabe für die direkt Übermittlung des Zustandes an einen Anwender / Benutzer verwendet werden.

Weitere Möglichkeiten der Zustandsübermittlung bei dem erfindungsgemäßen Verfahren werden im Zusammenhang mit dem nach dem Verfahren arbeitenden Messgerät nachfolgend noch diskutiert.

Durch das erfindungsgemäße Verfahren, welches eine genauere Lokalisierung von eingeschlossenen Objekten ermöglicht, kann ein Anwender eine sehr genaue Lokalisierung von eingeschlossenen Objekten allein über den Wechsel des Zustandes *"Objekt detektiert"* bzw. *"kein Objekt detektiert"* vornehmen, ohne den genauen Messsignalverlauf kennen zu müssen. Darüber hinaus wird dem Anwender eindeutig signalisiert in welchen Situationen er gefahrlos, beispielsweise in eine Wand Bohren kann, da an dieser Stelle keinerlei eingeschlossenes Objekt vorliegt.

Bei gewöhnliche Ortungsgeräte mit nur zwei Warnstufen, nämlich "kein Objekt detektiert" / "Objekt detektiert" muss die Warnung, dass ein Objekt detektiert wird, recht früh erfolgen, um die Sensitivität des Gerätes und damit die maximale Suchtiefe nicht zu beschneiden. Die Folge ist ein großflächiges Warnen per LED oder Piepser, ohne dass eine klare Aussage getroffen werden kann, wo sich denn das Objekt genau befindet.

Ein nach dem erfindungsgemäßen Verfahren arbeitendes Messgerät zeigt nun nicht mehr über einen weiten Verfahrbereich den Zustand "Objekt detektiert" an. Insbesondere schränkt sich der dem lokalisierten Objekt zugewiesene Messbereich beispielsweise beim mehrfachen Wechsel der Verfahrrichtung eines Messgerätes aufgrund der dynamischen Schwellen immer weiter ein. Mit den genau drei vorhandenen Warnstufen wird der Benutzer sicher gewarnt, wenn es gefährlich sein könnte und es wird ihm nunmehr durch die erste Warnstufe wirklich die exakte Position des Objektes mitgeteilt.

Das erfindungsgemäße Messgerät besitzt dazu Ausgabemittel, die es gestatten, den jeweils gemessenen Zustand (Z) wiederzugeben. Vorteilhafter Weise erfolgt die Wiedergabe des Zustands Z (Z=a, Z=b, Z=c) optisch, insbesondere mittels dreier unterschiedlicher Farben. Hier können beispielsweise die unterschiedlichen Zustände farblich unterschiedlich codiert sein. Auch ist es möglich, die unterschiedlichen Zustände durch eine unterschiedliche Wiederholfrequenz eines optischen Signals zu unterscheiden.

Wenn man die drei Warnstufen analog einer Ampel gestaltet (rot (Z=a); gelb (Z=c); grün (Z=b)) ist eine solche Zustandsübermittlung / Anzeige auch weltweit intuitiv erfassbar und selbsterklärend.

Die Farben können natürlich beliebig gewählt werden, wobei grün - gelb - rot natürlich vorteilhaft ist.

Darüber hinaus ermöglichen genau drei Wahnstufen bzw. Zustandsanzeiger Z eine eindeutige Information über das zugrunde liegende Gefahrenpotential.

Das Messgerät kann dazu eine oder mehrere LEDs aufweisen oder aber auch mit einem Display als Ausgabemittel versehen sein.

Die Farben zur Übermittlung des Detektionszustandes können beispielsweise auch durch das Backlight eines Segment- oder Grafik-Displays oder durch ein OLED-Display erzeugt werden.

Das Display (LED-Array) kann so groß sein, dass es die tatsächlichen Ausmaße des Objektes darstellen kann. Dabei sind im Falle eines LED-Array die LEDs oberhalb eines Objektes beispielsweise rot, über unsicheren Stellen beispielsweise gelb und bei sicherer Abwesenheit von Objekt beispielsweise grün.

Im Falle eines Messgerätes, welches als Studsensor ausgebildet ist, kann dabei auch eine Abwandlung vorgenommen werden, dass oberhalb eines Objektes beispielsweise rot angezeigt wird, an den Kanten eines Balken/Studs beispielsweise gelb und neben dem Objekt beispielsweise grün.

Insbesondere bei Geräten zur Detektion von Balken in Leichtbauwänden kann die dritte Warnstufe auch dann aktiviert werden, wenn sich das Gerät rechts der linken Kante des Balkens und links der rechten Kante des Balkens befindet. Hierzu ist eine Kantendetektionsfunktion erforderlich, wie es sie jedoch in nach dem Stand der Technik bekannten Geräten zur Detektion von Balken bereits gibt. Auch bei auf niederfrequenten, kapazitiven Sensoren basierenden Geräten zur Detektion von Balken ist die Detektion von Balkenkanten z.B. mit differenziellen Messelektroden möglich. Hierbei ergeben sich lokale Extrema im Messsignal an der Position der Balkenkanten. Ebenso ermöglichen solche differenzielle Messelektroden die genaue und eindeutige Mittenbestimmung anhand eines Nulldurchgangs im Messsignal. Erfindungsgemäß ist es dann auch möglich, dass die erste Warnstufe *"Objekt detektiert"* nur in einem kleinen Bereich um die Mitte des Balkens herum aktiviert wird und eine weitere Übergangsstufe (beispielsweise als gelb-rot periodisch alternierend codiert) im Bereich links der Mitte und rechts der linken Kante bzw. rechts der Mitte und links der rechten Kante also über die Balkenbreite aktiviert wird.

Auch ein sogenanntes Balkendiagram oder eine Balkenskala (oder dergleichen) auf dem Display eines Messgerätes könnte in verschiedenen Farben dargestellt werden, so dass die Anzeige im Display zusätzlich direkt mit der Farbinformation des Detektionszustandes Z kombiniert wäre.

Als eine "erste Farbe" bei der Farbcodierung der drei erfindungsgemäßen Zustände, beispielsweise zur Übermittlung des Zustandes Z=b (*"kein Objekt detektiert")* könnte insbesondere auch eine ausgeschaltete LED verwendet werden, so dass die Zustände Z=b, Z=c, Z=b den Beleuchtungsarten "aus"; "gelb"; "rot" entsprechen würden.

Die Bedeutung der Farben / Anzeigen / Signale der drei Warnstufen könnte auf dem Gehäuse des Messgerätes, beispielsweise auch auf einem Aufkleber, als Ampel-Symbol oder in einer Online-Betriebanleitung im Display des Gerätes erklärt werden.

In anderen Ausführungsbeispielen könnte auch die Größe des Lichtbereichs variiert werden oder die Helligkeit beispielsweise in drei Stufen moduliert werden.

Es könnten LEDs, Lampen, andere Leuchtmittel, eine beleuchtete Bohrung wie bei dem Gerät DMF 10 Zoom (vergleiche hierzu die DE 10 2004 011285 A1), ein beleuchtetes Gehäuse (z.B. aus Acryl), eine Beleuchtung der Wand bzw. Projektion eines Symbols auf die Wand (z.B. Strich, Fadenkreuz etc), Laser zur Darstellung und Übermittlung der Warnstufen/des Zustandes Z verwendet werden.

Statt verschiedener Farben könnten in alternativen Ausführungsbeispielen auch intermittierende Lichtsignale (rotes Blinken, rot-grünes Wechselblinken, schnelles oder langsames Blinken) verwendet werden.

Neben einer optischen Wiedergabe der Zustände ist selbstverständlich auch eine akustische Wiedergabe, beispielsweise ein in der Tonhöhe unterschiedlicher Zustand bzw. eine unterschiedliche Wiederholfrequenz eines und desselben Tones ebenso möglich.

Statt Farben oder Tönen könnte auch eine Sprachausgabe verwendet werden.

Alternativ könnte auch eine Vibration des Gerätes (nicht - schwach - stark) analog dem Vibrationsalarm von Mobiltelephonen verwendet werden.

In weiterhin vorteilhafter Weise wird das Messsignal als Funktion einer lateralen Verschiebung eines Sensors gemessen. Das Ortungsgerät hat dabei einen oder mehrere Sensoren implementiert, welche die Gegenwart von Metallen (induktive Sensoren), Holzbalken (kapazitive Sensoren), spannungsführende Kabel (50Hz-Sensoren) und/oder beliebige Objekte (Radar-, UWB-, Hochfrequenzsensoren) detektieren können. Ein solcher Sensor kann beispielsweise über eine oder mehrere Sendespulen und ein Empfangsleitersystem verfügen. In alternativen Ausführungsformen kann ein solcher Sensor beispielsweise nur über ein Empfangsleiterschleifensystem verfügen, um beispielsweise die Lokalisierung von Wechselströmen zu ermöglichen. Auch ein kapazitiver Sensor, beispielsweise zur Holzbalkensuche ist möglich. Alternative Ausführungsformen eines Messgerätes können einen Sensor mit einem Antennenelement zur Aussendung und/oder Detektion von HF-Signalen, insbesondere UWB-Signalen (Ultrabreitbandsignalen). Unter einem "ultrabreitbandigen Signal" soll insbesondere ein Signal verstanden werden, welches ein Frequenzspektrum mit einer Mittenfrequenz und einer Frequenzbandbreite von zumindest 500 MHz aufweist. Die Mittenfrequenz ist vorzugsweise im Frequenzbereich von 1 GHz bis 15 GHz gewählt.

Die Sensoren können jeweils einzeln in ein Messgerät integriert sein, oder aber auch zu mehreren, in beliebigen Kombinationen in einem einzelnen Messgerät vereint sein. Dabei kann beispielsweise ein solches, nach dem erfindungsgemäßen Verfahren ausgeführtes Messgerät über eine Wand verschoben oder verfahren werden, so dass entsprechende Objekte, wie beispielsweise Metallteile, Stromkabel oder auch Holzbalken, die in dieser Wand eingeschlossen sind, lokalisiert werden können. Jeder Position des Messgerätes, die dann beispielsweise über eine Wegsensorik des Gerätes gemessen wird, wird dabei eine bestimmte Größe eines Messsignals zugewiesen.

Ein solches Messgerät zur Durchführung des erfindungsgemäßen Verfahrens, welches insbesondere als ein handhaltbares Ortungsgerät ausgebildet sein kann, weist in vorteilhafter Weise Ausgabemittel auf, die es gestatten, den jeweils gemessenen Zustand "*Objekt detektiert", "Objekt in der Nähe"* oder *"kein Objekt detektiert"* wiederzugeben. Dabei kann für jeden vorhandenen Sensor eine eigene Ausgabeeinheit vorgesehen sein, oder die Ausgabe der Zustandssignale aller im Messgerät vereinten Sensoren erfolgt über eine Zentrale Ausgabeeinheit des Messgerätes, beispielsweise ein graphisches Display. Auch eine akustische Ausgabe ist möglich. Durch die Wiedergabe des jeweiligen Zustands (*"Objekt detektiert", "Objekt in der Nähe"* oder *"kein Objekt detektiert*") einzelner Sensoren kann somit einem Anwender übermittelt werden ob sich das Messgerät im Bereich eines lokalisierten Objektes befindet und um welche Art von Objekt es sich dabei handeln könnte.

Das erfindungsgemäße Messgerät verfügt über zumindest einen Sensor, welcher mindestens ein Empfangsleiterschleifensystem, beispielsweise eine Empfangsspule aufweist. Weitere Sende- oder Empfangsspulen bzw. auch weitere Sensoren sind in anderen Ausführungsformen des erfindungsgemäßen Messgerätes ebenso möglich. Dabei ist ein solcher Sensor so abgeglichen, dass bei Lokalisierung eines Objektes eine Signalveränderung bei einer Gerätebewegung relativ zum Objekt messbar wird. Mit dem erfindungsgemäßen Verfahren bzw. mit einem das erfindungsgemäße Verfahren ausführenden Messgerät, beispielsweise einem handgehaltenen Ortungsgerät, ist eine erhöhte Genauigkeit bei der Lokalisierung des in einem Medium eingeschlossenen Objektes möglich. Trotz des sehr hohen Dynamikbereiches des vom Sensor generierten Messsignals ist eine verbesserte, genaue Lokalisierung der Objekte durch die dynamische Zustandszuordnung gemäß dem erfindungsgemäßen Verfahren möglich. Der erste Zustand Z=a d.h. "Objekt detektiert" entspricht damit vielmehr der Informationsübermittlung *"Objekt lokalisiert".* Eine genaue Ortung, d.h. Lokalisierung eines eingeschlossenen Objektes wird damit in vorteilhafter Weise möglich.

Weiter Vorteile des erfindungsgemäßen Verfahrens bzw. eines Messgerätes zur Durchführung dieses Verfahrens sind der nachfolgenden Beschreibung eines Ausführungsbeispiels sowie den zugehörigen Zeichnungen zu entnehmen.

### Zeichnung

In der Zeichnung ist ein Ausführungsbeispiel für das erfindungsgemäße Verfahren dargestellt, das in der nachfolgenden Beschreibung näher erläutert werden soll. Die Figuren der Zeichnung, deren Beschreibung sowie die Ansprüche enthalten zahlreiche Merkmale in Kombination. Ein Fachmann wird diese Merkmale auch einzeln betrachten und zu anderen, bzw. weiteren sinnvollen Kombinationen zusammenfassen.

Es zeigt:
- Figur 1: eine typische Messsituation zur Ortung und Lokalisierung von einem Medium eingeschlossenen Objekt in einer schematisierten Darstellung,
- Figur 2a: eine schematisierte Darstellung des Verlaufs des detektierten Messsignals sowie des wiedergegebenen Zustandes als Funktion des Ortes bei Verwendung eines Verfahrens nach dem Stande der Technik,
- Figur 2b: die dem Verlauf des Messsignals aus Figur 2a zu Grunde liegenden Messsituation einer schematisierten Darstellung,
- Figur 3a: eine schematisierte Darstellung des Verlaufs des detektierten Messsignals sowie des wiedergegebenen Zustandes als Funktion des Ortes bei Verwendung des erfindungsgemäßen Verfahrens,
- Figur 3b: die dem Verlauf des Messsignals aus Figur 3a zu Grunde liegende Messsituation in einer schematischen Darstellung,
- Figur 4: eine Detaildarstellung des Messsignalverlaufs und des daraus gewonnenen Zustandsignals in der unmittelbaren Nähe eines zu lokalisierenden Objektes in einer schematisierten Darstellung zur Verdeutlichung der Funktion der, im Verfahren nutzbaren "dynamischen Schwelle"
- Figur 5: eine perspektivische Darstellung eines möglichen Ausführungsbeispiels für ein erfindungsgemäßes Messgerät.

### Beschreibung eines Ausführungsbeispiels

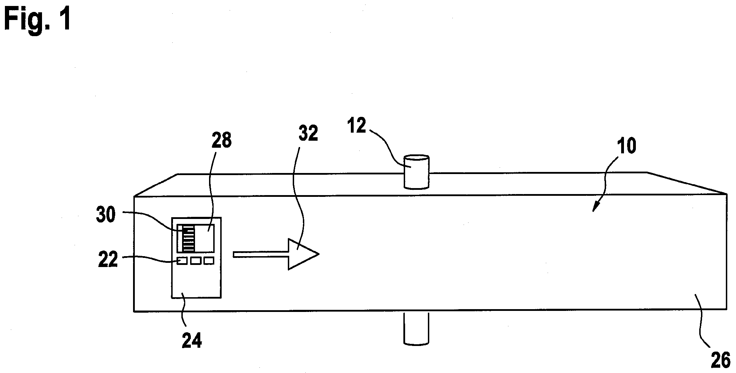

Figur 1 zeigt eine typische Mess-Situation zur Ortung von in einem Medium 10, bspw. einer Wand, einem Boden oder einer Decke eingeschlossenen Objekten. Ein Ortungsgerät 24 wird über die Oberfläche 26 eines zu untersuchenden Mediums 10 verschoben, um die Lage eines in dem Medium 10 eingeschlossenen Objektes 12 zu detektieren, d.h. zu lokalisieren. Bei einem solchen Objekt 12 kann es sich bspw. um eine elektrische Leitung, Rohre, bspw. Wasserrohre, Metallständer, oder auch andere Gegenstände, wie beispielsweise Holzbalken handeln. Bei dem Ortungsgerät kann es sich um ein induktives Ortungsgerät, ein kapazitives Ortungsgerät, ein Radarortungsgerät oder auch um eine Kombination dieser Detektionsmethoden handeln. Das erfindungsgemäße Verfahren ist jedoch nicht auf diese Detektionsmethoden beschränkt. Ein derartiges Ortungsgerät 24 kann insbesondere einen induktiven Sensor mit zumindest einer Sendespule sowie einem als Empfangseinheit dienenden Empfangsleiterschleifensystem aufweisen. Ein solches Messgerät kann aber auch beispielsweise ein Netzspannungsdetektor sein, der lediglich ein Empfangsleiterschleifensystem, beispielsweise eine Spule als Sensor zur Detektion des Messsignals besitzt.

Befindet sich nun ein entsprechender Gegenstand in der Nähe der Empfangsgeometrie, so modifiziert dieser Gegenstand beispielsweise das von der Sendegeometrie erzeugte Feld, so dass ein resultierender Fluss im Empfänger, beispielsweise in der Empfangsspule induziert wird. Der in der Empfangsspule bzw. einem Empfangsleiterschleifensystem induzierte Fluss kann dann als Messspannung beispielsweise an der Spule oder einem nachgeschalteten Messverstärkern abgegriffen werden. Das detektierte Messsignal, beispielsweise die abgegriffene Messspannung U_{M} ist umso größer, je näher der induktive Sensor dem eingeschlossenen Objekt kommt.

Neben einer entsprechenden Ansteuerelektronik, der zugehörigen Energieversorgung sowie einer Auswerteeinheit für das detektierte Messsignal weist ein derartiges Ortungsgerät 24 beispielsweise auch eine grafische Anzeige 28 auf, die eine Ausgabegröße wiedergibt, die mit der Stärke des detektieren Messsignals korreliert ist. Die Ausgabegröße kann beispielsweise in Form eines Balkendiagramms 30 dargestellt werden, wobei die Anzahl der beleuchteten Balken zwischen einem Minimalwert und einem Maximalwert ein Maß für die Stärke des Messsignals darstellen. Neben der in Figur 1 gezeigten Darstellung der Ausgabegröße mittels eines Balkendiagramms 30 sind auch andere Ausgabeformen, insbesondere weitere optische Darstellungen, möglich. So kann beispielsweise über entsprechende Leuchtelemente 22 der Zustand *"Objekt detektiert" "Objekt in der Nähe"* bzw. *"kein Objekt detektiert"* werden.

Nähert sich ein derartiges Ortungsgerät 24 einem eingeschlossenen Objekt 12, wie dies beispielsweise durch ein Verschieben des Gerätes in Richtung des Pfeils 32 - gemäß der Darstellung in Figur 1 - der Fall wäre, so steigt das detektierte Messsignal an.

Insbesondere bei Geräten des Standes der Technik kann es nun zu Mess-Situationen in der Nähe des eingeschlossenen Gegenstandes 12 kommen, bei denen über einen größeren Verfahrweg des Ortungsgerätes 24 im Bereich des zu detektierenden Objektes 12 das Messsignal derart stark ist, dass über den gesamten Bereich der Maximalausschlag der Ausgabegröße, beispielsweise der abgegriffenen Messspannung U_{M} wiedergegeben wird. In diesem Fall ist eine exakte Ortung. D.h. Lokalisierung der Lage des eingeschlossenen Objektes 12 nicht möglich.

Andererseits kann bei der Verwendung eines Systems mit einer sogenannten adaptiven Schwelle, wie dies bereits oben beschrieben ist, die Ausgabeeinheit, beispielsweise eine LED, "grün" zeigen ("*kein Objekt detektiert"),* obwohl man sich über einem Objekt befindet. Dies passiert insbesondere dann, wenn dieses Objekt kleiner ist als ein nebenliegendes, stärkeres Objekt, da sich die Schwelle für die Zustandsänderung dann an dem großen Objekt orientiert. Der Verwender könnte die "grüne" Zustandsanzeige (*"kein Objekt detektiert")* missverstehen und in ein verborgenes Objekt, beispielsweise eines Wasserleitung, hineinbohren. So ist ein nicht zu unterschätzender Nachteil einer direkten Änderung von Zustand *"kein Objekt detektiert"* auf den Zustand *"kein Objekt detektiert"* vorhanden

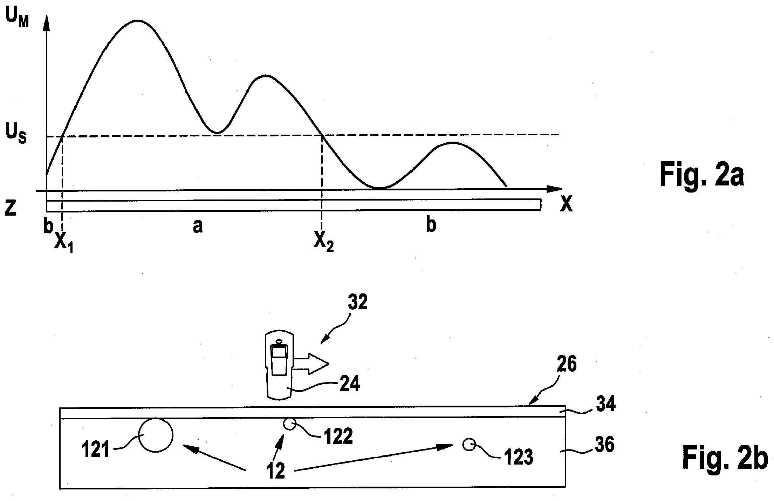

Figur 2a zeigt den Verlauf des Messsignals U_{M} und die mögliche Wiedergabe der Zustände Z "*Objekt detektiert" "Objekt in der Nähe"* bzw. *"kein Objekt detektiert"* bei einem Lokalisierungsverfahren mit fixer Schwelle nach dem Stand der Technik. Dabei entspricht der Zustand *"Objekt detektiert"* dem Bereich Z=a und der Zustand *"kein Objekt detektiert"* ist in Figur 2a mit Z=b gekennzeichnet.

Die zugrunde liegende Messsituation ist ein Figur 2b wiedergegeben. In einem Medium 36 eingeschlossen sind verschiedene Objekte 12, beispielsweise Wasserleitungen, Stromleitungen oder dergleichen. Mit einem Ortungsgerät 24 soll die Lage dieser eingeschlossenen Objekte 12 lokalisiert werden. Das Ortungsgerät 24 wird dazu in Richtung des Pfeils 32 über die Oberfläche 26 beispielsweise einer Wand 34 verschoben. Figur 2a zeigt den zugehörigen Signalverlauf des Messsignals U_{M}, welches beispielsweise die in einer Spule des Messgerätes induzierte Spannung sein kann, als Funktion der lateralen Verschiebung X des Messgerätes 24 über der Oberfläche 26 der zu untersuchenden Wand.

Ist das Messgerät mit seinem Sensor noch weit von einem eingeschlossenen Gegenstand 12 entfernt, so ist das entsprechende Messsignal noch gering.

Messgeräte nach dem Stand der Technik besitzen zumeist eine Detektionsschwelle U_{S}. Liegt das Messsignal eines Objektes unterhalb dieser Schwelle U_{S}, wird das Objekt als solches nicht erkannt und kann somit nicht lokalisiert werden. Ein Messgerät gibt in diesem Fall eine Information aus, die dem Zustand *"kein Objekt detektiert"* (Z=b) widerspiegelt. Ein solcher Zustand *"kein Objekt detektiert"* wird bei der in den Figuren 2 dargestellten Messsituation in den Bereichen b des lateralen Verfahrweges X eingenommen. Nähert man sich mit einem Messgerät 24 einem in dem Medium 36 eingeschlossenen Objekt 12, insbesondere dem Objekt 122 an, so steigt das Messsignal U_{M} an. Übersteigt das aktuell gemessene Messsignal U_{M} die Messsignalschwelle U_{S} so wechselt der Zustand Z von *"kein Objekt detektiert"* (Z=b) auf den Zustand *"Objekt detektiert"* (Z=a). Einem Anwender wird damit mitgeteilt, dass das Messgerät ein eingeschlossenes Objekt gefunden hat.

In den Verfahren des Standes der Technik gemäß den Figuren 2 wird der Zustand *"Objekt detektiert"* (Z=A) über einen weiten lateralen Verfahrweg X des Messgerätes 24 angezeigt, da der jeweils aktuell gemessene Signalwert U_{M} in diesem gesamten Bereich oberhalb der Detektionsschwelle U_{S} liegt. Insbesondere ist es mit dem in den Figuren 2 dargestellten Verfahren nicht möglich, zu detektieren, dass es sich um zwei getrennte, eingeschlossene Objekte 121 und 122 handelt, die dazu beitragen, dass das Messsignal U_{M} über einen weiten Bereich oberhalb der Detektionsschwelle U_{S} liegt. Eine genaue Lokalisierung der Objekte 121 bzw. 122 ist mit einem derartigen Verfahren, welches lediglich die Zustandsänderungen übermittelt, nicht möglich.

Darüber hinaus ist es mit einem derartigen Verfahren auch nicht möglich, ein Objekt 123 zu lokalisieren, welches ein Messsignal U_{M} erzeugt, welches unterhalb der Messsignals-Schwelle zur Objekt-Erkennung liegt. Unterschreitet das aktuell gemessene Messsignal U_{M} die Messsignalschwelle Ug, wie dies an der lateralen Position X₂ in Figur 2a dargestellt ist, so wechselt der Zustand *"Objekt detektiert"* (Z=a) auf den Zustand *"kein Objekt detektiert".* (Z=b) Da das aktuell gemessene Messsignal U_{M} auch bei einem weiteren Verfahren des Messgerätes 34 unterhalb der Messsignal-Schwelle Ug bleibt, wird der zweite Zustand "kein Objekt detektiert" über den gesamten Bereich b aufrecht erhalten, obwohl das Objekt 123 einen deutlichen Signalausschlag des Messsignals U_{M} hervorruft.

Das in Figuren 2 dargestellte Verfahren nach dem Stand der Technik hat somit den Nachteil, dass ein Objekt, welches ein Messsignal erzeugt, welches unterhalb der Messsignal-Schwelle liegt, überhaupt nicht als Objekt erkannt werden kann. Senkt man das Schwellwert-Niveau ab, um auch ein kleineres Objekt, wie beispielsweise das Objekt 123 zu lokalisieren, so verstärkt sich der Effekt der Übersteuerung und Nichtdifferenzierbarkeit von signalstarken Objekten , wie die Objekte 121 und 122. Denn: handelt es sich um ein Objekt mit einem sehr großen Messsignal, bei welchem die Messsignal-Schwelle bereits frühzeitig, dass heißt auch in großer Entfernung von dem zu lokalisierendem Objekt überschritten wird, kann das Objekt zwar erkannt werden, aber eine genaue Lokalisierung bzw. auch Differenzierung unterschiedlicher Objekte ist nicht möglich.

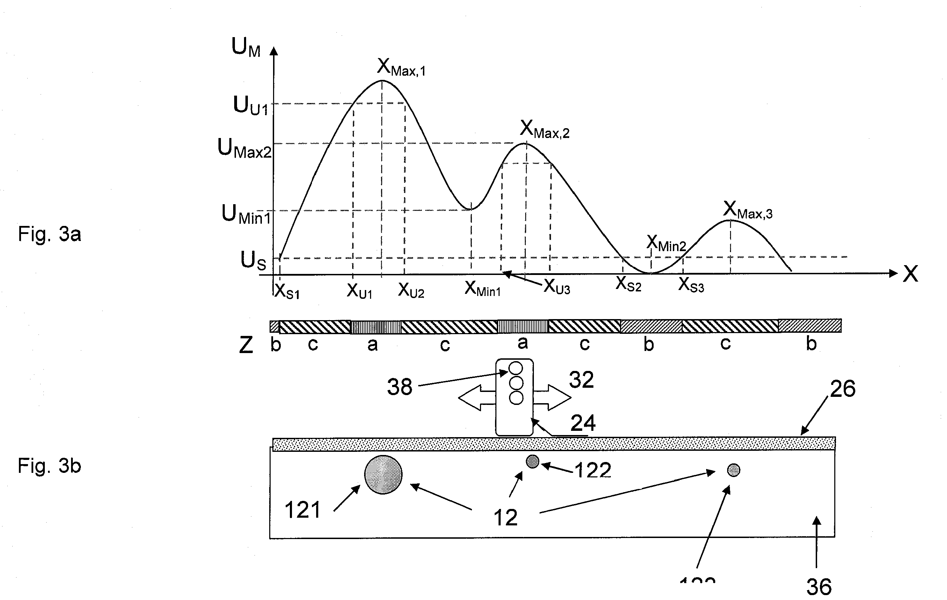

Die Figuren 3a und 3b zeigen eine entsprechende Messsituation bei Verwendung des erfindungsgemäßen Verfahrens. Die Messsituation in Figur 3b entspricht der Messsituation der Figur 2b. Ein Messgerät 24, welches nach dem erfindungs-gemäßen Verfahren arbeitet, wird in Pfeilrichtung 32 über die Oberfläche 26 einer Wand, eines Bodens oder einer Decke verschoben. In dem Medium 36 eingeschlossen sind Objekte 12, die beispielsweise Wasserrohre, Stromleitungen oder auch Holzbalken sein könnten.

Figur 3a zeigt zum einen den Verlauf des vom Messgerät detektierten Messsignals U_{M} sowie ein Zustandssignal (Z), welches aus dem Messsignal U_{M} generiert wird und welches zwischen den drei diskreten Zuständen *"Objekt detektiert"* (Zustand Z=a) *"Objekt in der Nähe"* (Zustand Z=c) und *"kein Objekt detektiert"* (Zustand Z=b) unterscheidet. Insbesondere weist das erfindungsgemäße Verfahren genau drei Zustände Z auf.

Das erfindungsgemäße Verfahren zur Erkennung und Lokalisierung von Objekten verfügt über eine relativ geringe feste Schwelle U_{S}. Nur oberhalb dieser Schwelle U_{S} kann ein Objekt als solches überhaupt erkannt werden. Als Schwelle wird hier die Rauschschwelle des Detektions-systems genutzt werden. Wird das nach dem erfindungsgemäßen Verfahren arbeitende Messgerät in Richtung des Pfeils 32 über die Oberfläche 26 verschoben, so steigt, wie in Figur 3a dargestellt, das aktuell gemessene Messsignal U_{M} an. Übersteigt das aktuell gemessene Messsignal U_{M} die vorgegebene Messsignal-Schwelle U_{S}, so wird ein Signal erzeugt, welches den Zustand Z=c ("*Objekt in der Nähe*") darstellt. Die Zustands-anzeige wechselt an der Position X_{S1} von Z=b (*"kein Objekt detektiert*") auf den Zustand Z=c ("*Objekt in der Nähe*")*.* Das Signal Z=b sagt einem Anwender in vorteilhafter Weise, dass kein Objekt lokalisiert worden ist und auch kein Objekt in der Nähe sein kann. An dieser Stelle ist beispielsweise ein gefahrloses Arbeiten möglich. Das Signal Z=c sagt einem Anwender, dass ein Objekt zwar noch nicht definitiv lokalisiert worden ist, aber ein Objekt in der Nähe sein könnte bzw. sollte. An einer solchen Stelle X wäre also Vorsicht geboten. Beispielsweise sollten weitere Information, wie elektrische oder sanitäre Verlege- oder Baupläne oder dergleichen herangezogen werden, um beispielsweise sicher zu stellen, dass an der aktuellen Messposition X wirklich kein Objekt vorhanden ist.

Der zusätzlich Zustand Z=c *("Objekt in der Nähe")* ermöglicht es in vorteilhafter Weise, dass die Detektionsschwelle U_{S} sehr gering gewählt werden kann, ohne dass es bei starken Signalen dann zu einem deutlichen und nicht mehr vertretbaren Übersteuern kommt.

Zur Wiedergabe des Zustandes Z=a bzw. des konträren Zustandes Z=b sowie des Zustandes Z=c kann beispielsweise das Farbsignal dreier unterschiedlicher Leuchtdioden 38 verwendet werden, welche als Ausgabemittel in das Messgerät 24 integriert sind. Wechselt der Zustand Z von *"kein Objekt detektiert"* (Z = b) auf einen Zustand *"Objekt in der Nähe"* (entsprechend Z=c) , so kann beispielsweise von einer grünen Leuchtdiode auf eine gelbe Leuchtdiode umgeschaltet werden, um einem Anwender zu signalisieren, dass er nunmehr mit erhöhter Vorsicht vorzugehen hat, da ein Objekt in der Nähe der Messposition sein könnte bzw. sein wird.

Bei einem weiteren Verschieben des Messgerätes 24 in Richtung des Pfeils 32 in Figur 3b steigt das Messsignal U_{M} weiter an und der einem Anwender übermittelte Zustand bleibt erst einmal auf Z=c gesetzt. Das Ansteigen des Messsignals kann einem Anwender beispielsweise mittels einer zusätzlichen Balkenanzeige übermittelt werden. An einer Position X_{U1} wird der Umschaltpunkt vom Zustand Z=c *("Objekt in der Nähe")* auf den Zustand Z=a *("Objekt detektiert")* erreicht. Die Schwelle U_{U} für das Umschalten der Zustandanzeige vom Zustand Z=c ("*Objekt in der Nähe*") auf den Zustand Z=a (*"Objekt detektiert*") kann eine statische Schwelle sein oder aber auch als dynamische Schwelle, wie in der DE 102005015325 A1 beschrieben, ausgebildet sein. Zur Beschreibung der Funktionsweise wird an dieser Stelle vorübergehend von einer statischen Schwelle ausgegangen. Die Funktionsweise einer entsprechenden dynamischen Schwelle, welche das Überfahren des Maximalwertes erfordert, wird weiter unten beschrieben.

An einer Position X_{Max1} wird ein erster Maximalwert U_{Max1} für das Messsignal U_{M} erreicht. Das Ansteigen des Messsignals bis dorthin kann einem Anwender beispielsweise mittels einer zusätzlichen Balkenanzeige übermittelt werden, falls dies gewünscht sein sollte.

Sinkt nun bei dem erfindungsgemäßen Verfahren das aktuelle Messsignal U_{M} beispielsweise durch weiteren Verschieben des Messgerätes in Pfeilrichtung 32 wieder auf die Umschaltschwelle U_{U} , so ändert sich der der Zustandsanzeigen von der Ausgabe Z=a (*"Objekt detektiert*") in den Zustand Z=c *("Objekt in der Nähe").* Über die Ausgabe des Messgerätes wird einem Anwender somit signalisiert, dass er den exakten Lokalisierungsbereich des gefundenen Objektes wieder verlassen hat, es aber noch damit zu rechnen ist, dass das Objekt weiterhin "in der Nähe" ist.

In vorteilhafter Weise kann auch die Schwelle für den Übergang von Z=a ("*Objekt detektiert*") in den Zustand Z=c (*"Objekt in der Nähe")* eine dynamische Schwelle sein. Dies soll nachfolgend unter zusätzlicher Berufung auf die DE 10 2005 015325 A1, die somit ebenfalls als Offenbarungsgehalt dieser Anmeldung anzusehen ist, kurz beschrieben werden.

Sinkt bei dem erfindungsgemäßen Verfahren mit dynamischer Schwelle das aktuelle Messsignal U_{M} beispielsweise durch weiteren Verschieben des Messgerätes in Pfeilrichtung 32 um einen vorgegebenen Prozentsatz P₁ gegenüber dem zuletzt gemessenen Maximalwert U_{Max1} wieder auf einen Wert U_{U1} ab, so wechselt das Signal Z, welches den jeweiligen Zustand des Systems charakterisiert, vom Zustand Z=a *("Objekt detektiert")* auf den Zustand Z=c *("Objekt in der Nähe").* So kann beispielsweise vom Zustand Z=a auf den Zustand Z=c gewechselt werden, falls das aktuell gemessene Messsignal U_{M} um 15 % gegenüber dem zuvor gemessenen Maximalwert U_{Max1} abgefallen ist (d.h. U_{U1} = U_{Max1} *(1 - 0,15) ). Der Wert von 15% ist hierbei lediglich ein typischer, beispielsweise möglicher Wert, der keinerlei Einschränkung signalisieren soll. Andere Werte sind ebenso möglich. Insbesondere ist es möglich, diese Umschaltschwelle zwischen dem Zustand Z=a und dem Zustand Z=c bei unterschiedlichen Detektionsprogrammen für ein Messgerät auf das unterschiedliche Ansprechverhalten von eingeschlossenen Objekten aufgrund ihrer Materialzusammensetzung zu optimieren. Auch kann je nach verwendetem Sensorprinzip (beispielsweise induktiver Sensor, kapazitiver Sensor, AC-Sensor) dieser erste Prozentsatz P₁ optimiert werden. Zu beachten ist, dass dieser erste Prozentsatz P₁, wie ein noch zu beschreibender zweiter Prozentsatz P₂, keinen absoluten Wert darstellt, sondern bezogen ist auf den jeweils zuvor gemessenen Betrag des Maximalwertes U_{Max,n} bzw. im Falle des Prozentsatzes P₂ auf einen Minimalwert Uₘᵢₙ des Messsignals U_{Min,m}. Die jeweilige Signaländerung im Messsignal U_{M}, die notwendig ist, von einem Zustand Z=a auf einen Zustand Z=c bzw. umgekehrt umzuschalten, ist somit nicht absolut, sondern von der Größe des vorhandenen Messsignals abhängig du somit als dynamisch zu bezeichnen. Darüber hinaus verschiebt sich diese Schwelle aufgrund der unterschiedlichen Prozentzahlen P₁ bzw. P₂ der Schwellenwertdefinition mit jedem überstreichen eines Maximums oder Minimums des Messerwertes U. Auf diese Weise wird erreicht, dass auch kleinere Messsignale, die beispielsweise von kleineren Objekten, wie beispielsweise einem Objekt 122, erzeugt werden oder von einem tiefer in dem Medium eingeschlossenen Objekt, wie beispielsweise einem Objekt 123, resultieren, gegenüber einem starken Signal, wie es beispielsweise durch ein Objekt 121 erzeugt wird, hinreichend abgegrenzt ist, so dass die genaue Lokalisierung dieser einzelnen Objekte individuell möglich ist.

Wird das Messgerät 24 in Pfeilrichtung 32 der Figur 3b über das Objekt 121 hinaus weiter verschoben, so fällt das Messsignal U_{M} weiter ab und erreicht einen Minimalwert U_{Min1} an einer Stelle X_{Min1}. Wird das Messgerät darüber hinaus in Pfeilrichtung 32 weiter verschoben, so steigt das Messsignal aufgrund der Einwirkung des eingeschlossenen Objektes 122 wiederum an. Das Messgerät würde über den gesamten Verfahrweg von X_{U2} bis X_{Max2} den Zustand Z=c *("Objekt in der Nähe")* anzeigen, wenn für die Umschaltung vom Zustand Z=c auf den Zustand Z=a die statische Umschaltschwelle U_{U1} vorgesehen wäre. Selbst bei Erreichen einer lateralen Position X_{Max2} entsprechend einem zweiten lokalen Maximalwert Uₘₐₓ₂ wäre die Zustandsanzeige auf Z=c, obwohl die Position X_{Max2} mit der exakten Lage eines eingeschlossenen Objektes 122 zu identifizieren ist. Dies wäre bei dem erfindungsgemäßen Verfahren im Vergleich zu Verfahren nach dem Stand der Technik jedoch nur ein geringer und insbesondere auch aus Sicherheitsgründen vertretbarer Nachteil, da ein Anwender durch die Zustandsanzeige Z=c *("Objekt in der Nähe")* vorgewarnt ist, dass ein Objekt in der Nähe sein muss und beispielsweise auch über eine zusätzliche Balkenanzeige die genaue Position des Objektes ermitteln könnte. Zu einer gefährlichen Fehlaussage, wie dies mit einem konventionelle Messsystem im Falle des Objektes 123 in Figur 2a und 2b beschrieben ist, käme es aufgrund des erfinderischen Verfahrens in vorteilhafter Weise jedoch nicht.

In einer vorteilhaften Ausführungsform mit dynamischer Schwelle würde dass Messgerät bereits an der Position X_{U3} wieder von dem Zustand Z=c ("*Objekt in der Nähe*") auf einen Zustand Z = a (*"Objekt detektiert*") umschalten. Diese dynamische Schwelle für den Übergang vom Zustand Z=c *("Objekt in der Nähe")* auf einen Zustand Z = a ("*Objekt detektiert*") lässt sich beispielsweise wie folgt realisieren.

Steigt das aktuell gemessene Messsignal U_{M} , ausgehend von einem zuvor detektierten Minimalwert, beispielsweise U_{Min1} um einen vorgegebenen zweiten Prozentsatz P₂ an, so schaltet das erfindungsgemäße Verfahren den Zustand Z vom Signal von Z=c *("Objekt in der Nähe")* auf einen Zustand Z=a ("*Objekt detektiert*") um. Der zweite Prozentsatz P₂ könnte beispielsweise 10 % betragen, insbesondere dann, wenn der erste Prozentsatz 15% ist, wobei diese 10 % wiederum lediglich einen typischen Wert wiedergeben sollen und keinerlei Beschränkung möglicher Werte darstellen.

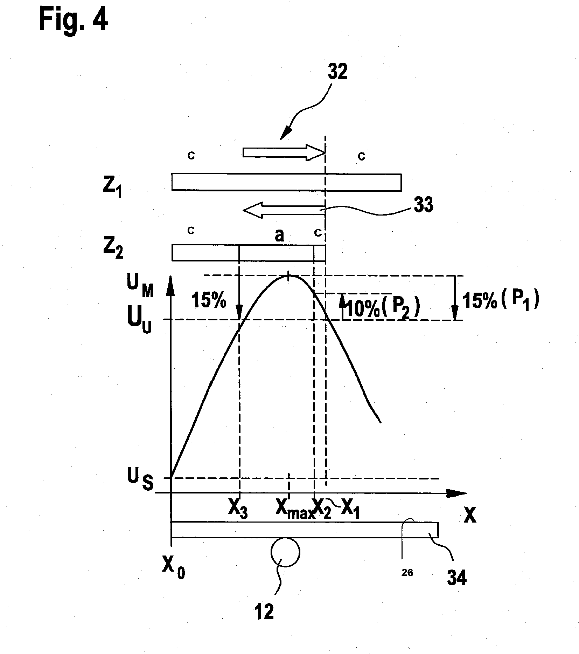

In vorteilhafter Weise ist jedoch der zweite Prozentsatz P₂ kleiner zu wählen als der erste Prozentsatz P₁, wie im Zusammenhang mit Figur 4 noch ausgeführt werden wird.

Wird das Messgerät über die Position X_{Max2} hinaus verfahren, so sinkt das Messsignal U_{M} mit zunehmendem Abstand vom eingeschlossenen Objekt 122 wieder ab. Sinkt das aktuell gemessene Messsignal U_{M} um den Prozentsatz P₁ (in Figur 3a beispielhaft 15 %) unter den Wert des zuvor gemessenen Maximums U_{Max2} des Messsignals ab, so schaltet das Zustandssignal Z von der Bedingung Z=a wieder auf den Zustand Z=c um. Einem Nutzer wird damit signalisiert, dass er den genauen Lokalisierungsbereich eines detektierten Objektes 122 wieder verlassen hat, das Objekt aber noch in der Nähe ist. Insbesondere wird diese Information *"Objekt in der Nähe"* generiert, wenn das Messsignal U_{M} oberhalb der Messsignal-Schwelle U_{S} liegt. Auf diese Weise ist eine genauere Lokalisierung von eingeschlossenen Objekten möglich, als es bei Verwendung lediglich einer konstanten Messsignal-Schwelle möglich wäre.

Wird das erfindungsgemäße Messgerät 24 weiter in Richtung des Pfeils 32 verfahren, so wird an einer Position x_{S2} das aktuell gemessene Messsignal U_{M} kleiner als die Messsignal-Schwelle U_{S}, was zur Änderung des Zustandes Z=c auf den Zustand Z=b (*"kein Objekt detektiert")* führt.

Bei einer weiteren Verschiebung des Messgerätes 24 in Pfeilrichtung 32 über die Position X_{S2} hinaus, durchläuft das Messsignal U_{M} ein weiteres lokales Minimum U_{Min2} an der Position X_{Min2} und steigt anschließend aufgrund des spürbar werdenden Einflusses eines weiteren Objektes 123 (s. Figur 3b) wiederum an. Bei diesem Anstieg des Messsignals U_{M} wird der Zustand von Z=b auf den Zustand Z=c *("Objekt in der Nähe")* umgeschaltet, falls das aktuell gemessene Messsignal U_{M} den Schwellwert U_{S} überschreitet oder einen vorgegebenen Prozentsatz des Signalwertes U_{Min2} des Minimums überschreitet.

In einer vorteilhaften Ausführungsform wird bei dem erfindungsgemäßen Verfahren von einem Zustand Z=b (*"kein Objekt detektiert*") auf einen Zustand Z=c ("*Objekt in der Nähe*") gewechselt, falls der zuletzt gemessene Minimalwert des Messsignals um einen definierten Prozentsatz P₂ überschritten wird oder die Größe des aktuell gemessenen Messsignals U_{M} über einen festen Schwellwert U_{S} ansteigt, falls dieser größer ist. Da im Ausführungsbeispiel der Figur 3a der Schwellwert U_{S} größer ist als der 10 %-ige Anstieg P₂ des Wertes U_{Min2} des zuletzt gemessenen Minimums des Messsignals (dies sei hier zur Verdeutlichung des Prinzips einmal angenommen), wird der Zustand von Z=b auf Z=c bei Überschreiten des Schwellwertes Ug umgeschaltet.

Bei einer weiteren Verschiebung des Messgerätes 24 in Pfeilrichtung 32 steigt das aktuell gemessene Messsignal U_{M} aufgrund der Annäherung an das eingeschlossene Objekt 123 an und erreicht an der Position X_{Max3} ein weiteres lokales Maximum, dessen Position mit der Position des eingeschlossenen Objektes 123 zu identifizieren ist. Wird das Messgerät über diese Position X_{Max3} hinaus in Pfeilrichtung 32 verfahren, so nimmt das aktuell gemessene Messsignal U_{M} aufgrund des zunehmenden Abstandes zu dem signalgenerierenden, eingeschlossenen Objekt 123 wieder ab. Fällt das aktuell gemessene Messsignal U_{M} um einen festen Prozentsatz P₁, im Ausführungsbeispiel der Figur 3a um 15 %, gegenüber dem Wert des zuletzt gemessenen Maximalwertes U_{Max3} des Messsignals ab, so würde aufgrund der dann vorliegenden Stärke U_{U3} des Messsignals der Zustand Z=c auf den Zustand Z=b gewechselt. Im vorliegenden wird jedoch zuvor bereits wieder das Signalniveau des festen Schwellwert U_{S} erreicht, so dass bei Unterschreiten dieses Signalniveaus U_{S} (d.h. U_{M} < U_{S} ) der aktuelle Zustand Z=c *("Objekt in der Nähe")* auf den Zustand Z=b ("*Kein Objekt detektiert")* umgeschaltet wird. Einem Anwender wird damit wiederum mitgeteilt, dass er einen Bereich ohne eingeschlossene Objekte erreicht hat.

In vorteilhafter Weise ist bei einer dynamischen Schwelle U_{M} der zweite vorgegebene Prozentsatz P₂, der als Umschaltbedingung von einem Zustand Z=c *("Objekt in der Nähe")* auf einen Zustand Z=a ("*Objekt detektiert*") dient, betragsmäßig kleiner gewählt als der erste vorgegebene Prozentsatz P1, der als Umschaltbedingung von einem Zustand Z=a auf einen Zustand Z=c dient. Da der Prozentsatz beim Überschreiten eines Minimumwerts kleiner ist als beim Unterschreiten eines Maximumwertes kann beim wiederholten Überfahren des gleichen Objektes, dieses noch wesentlich genauer lokalisiert werden, als beim einmaligen Überfahren. Dieser Zusammenhang ist in Fig. 4 anhand eines einzelnen Objektes 12 nochmals dargestellt und soll nachfolgend noch erläutert werden.

Wird das Messgerät ausgehend von der Startposition X₀ in Richtung des Pfeils 32 über die Oberfläche 26 einer Wand 34 fahren, so steigt das Messsignal U_{M} zunächst an. Übersteigt dabei das aktuell gemessene Messsignal U_{M} einen Schwellwert U_{S}, so wird aus dem Messsignal ein Zustandssignal Z generiert, welches den Zustand Z₁=c *("Objekt in der Nähe")* darstellt. Ein Anwender wird somit darüber informiert, dass ein eingeschlossenes Objekt 12 in der Nähe sein muss. Wird das Messgerät weiter in Richtung des Pfeils 32 verfahren, so durchläuft das aktuell gemessene Messsignal U_{M} an der Position X_{Max} einen Maximalwert, dessen Position X_{Max} mit der genauen Position des eingeschlossenen Objekts 12 beispielsweise anhand einer zusätzlichen Balkendiagramm Anzeige zu identifizieren wäre. Wird das Messgerät über die Position X_{Max} hinaus, in Richtung des Pfeils 32 weiter über die Oberfläche 26 der Wand 34 verfahren, so fällt das aktuell gemessene Messsignal U_{M} gegenüber dem Maximalwert U_{Max} wieder ab, ohne dass zunächst eine Änderung des Zustands Z₁=c herbeigeführt wird. Fällt das aktuell gemessene Messsignal U_{M} um einen vorgegebenen Prozentsatz P₁, der im Ausführungsbeispiel der Fig. 4 bei 15% liegt, gegenüber dem Wert des Maximums U_{Max} ab, so wird aus dem Messsignal U_{M} weiterhin ein Zustandssignal Z₁=c ("*Objekt in der Nähe")* generiert.

Wechselt der Anwender die Verfahrrichtung des Messgeräts an einer Stelle X₁ daraufhin von der Pfeilrichtung 32 auf die Pfeilrichtung 33, um die genaue Position des Objektes zu identifizieren, so dient der zuletzt gemessene Wert U_{U} (Umkehrpunkt) des Messsignals U_{M} als gemessener lokaler Minimalwert. Wird das Messgerät nunmehr in Richtung des Pfeils 33 auf das eingeschlossene Objekt 12 hin bewegt, so wird der Zustand Z₂=c erfindungsgemäß so lange beibehalten, bis der aktuell gemessene Messwert des Messsignals U_{M} einen Prozentsatz P₂ des zuletzt gemessenen Minimalwerts U_{U} überschreitet. Im Ausführungsbeispiel gemäß Fig. 4 ist ein zehnprozentiger Anstieg gegenüber dem zuletzt gemessenen Minimalwert U_{U} notwendig, d.h. P₂ = 10%, um die Umschaltbedingung vom Z₂=c *("Objekt in der Nähe")* auf den Zustand Z₂=a *("Objekt detektiert")* zu aktualisieren. Dieses Signalniveau wird im Ausführungsbeispiel der Fig. 4 an einer Position X₂ erreicht. D. h. bei dem Zurückfahren des Messgeräts in Richtung des Pfeils 33 wird der laterale Bereich, über den das erfindungsgemäße Verfahren die Information und das Signal Z=a ("*Objekt detektiert*") einem Anwender übermittelt wird, erstmalig definiert.

Wird das Messgerät nunmehr weiter in Richtung des Pfeils 33 verfahren, so durchläuft das aktuell gemessene Messsignal U_{M} an der Position X_{Max} wiederum einen Maximalwert, um beim weiteren Verfahren in Richtung des Pfeils 33 anschließend kontinuierlich abzusinken. Fällt der Wert des aktuell gemessenen Messsignals U_{M} unter einen vorgegebenen, festen Prozentsatz P₁ des Maximalwerts U_{Max} ab (im Ausführungsbeispiel der Figur 4 ist dies am Ort X₃ der Fall), so wird das Signal Z von dem Zustand Z₂=a ("*Objekt detektiert*") wieder auf einen Zustand Z₂=c korrigiert. Der Prozentsatz P₁ beträgt im Ausführungsbeispiel der Fig. 4 beispielsweise 15%, d.h. P₁ = 15%, kann jedoch prinzipiell jeden beliebigen Wert annehmen. Vorteilhaft ist es, darauf zu achten, dass der Prozentsatz P₁ größer gewählt wird, als der Prozentsatz P₂.

Wie der Fig. 4 zu entnehmen ist, ist der Bereich über den das eingeschlossene Objekt 12 beim Zurückfahren in Richtung des Pfeils 33 lokalisiert wird (d.h. Zustand Z₂=a) deutlich eingeschränkt gegenüber dem ursprünglichen Bereich Z₁=c. Wechselt ein Anwender an der Position X₃, an der vom Zustand *"Objekt detektiert"* (Z₂=a) auf den Zustand "*Objekt in der Nähe"* (Z₂=c) gewechselt wurde, neuerlich die Verfahrrichtung und verfährt das Messgerät ein weiteres Mal nunmehr wieder in Richtung des Pfeils 32 über das zu lokalisierende Objekt 12, so wird der Bereich, über den X_{Max} nochmals gegenüber dem Bereich Z₂=a eingeschränkt.

Einem Anwender ist es somit mit dem erfindungsgemäßen Verfahren unter Verwendung einer dynamische Schwelle U_{U} möglich, die genaue Lage eines eingeschlossenen Objekts (in Fig. 4 die Position X_{Max}) zu lokalisieren, ohne den genauen Verlauf des Messsignals U_{M} zu kennen. Allein aufgrund der erfindungsgemäßen Signale zum Zustand des Systems (Z=a) entsprechend *"Objekt detektiert"* bzw. (Z=c) *"Objekt in der Nähe"* und insbesondere aufgrund der unterschiedlichen Größe der Schaltbedingungen P₁ bzw. P₂ zum Wechseln des jeweiligen Zustands ist es möglich, ein eingeschlossenes Objekt mit deutlich erhöhter Genauigkeit zu lokalisieren. Der Zustand Z=a *"Objekt detektiert"* entspricht also vielmehr der konkreten Information *"Objekt lokalisiert".*

So kann beispielsweise ein Messgerät nur die Ausgabe des abgeleiteten Signals Z vorsehen und trotzdem eine genaue Lokalisierung von eingeschlossenen Objekten ermöglichen. Auf eine Intensitäts- oder Amplitudenangabe für das Messsignal, wie dies beispielsweise mit kontinuierlich arbeitenden Analogzeigergeräten oder digitalen Balkenanzeige realisiert werden kann, kann in dem erfindungsgemäßen Messgerät in vorteilhafter Weise verzichtet werden. Selbstverständlich kann auch in erfindungsgemäßen Messgeräten vorgesehen sein, dass sowohl das Signal Z als auch das Messsignal U_{M} ausgegeben wird.

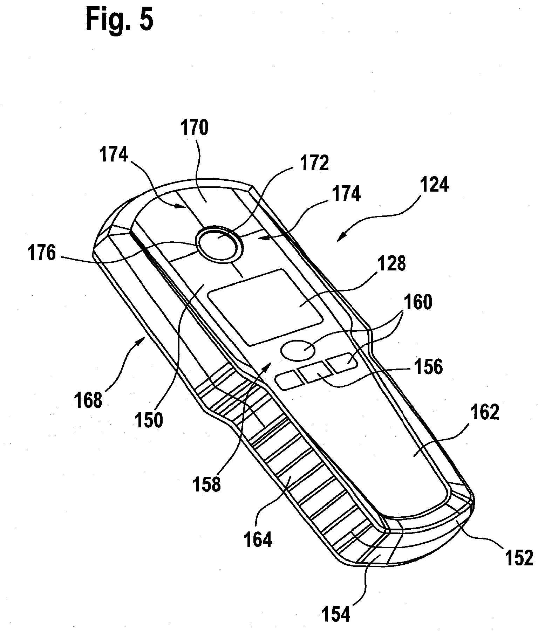

Fig. 5 zeigt ein mögliches Ausführungsbeispiel für ein erfindungsgemäße Messgerät, insbesondere ein handhaltbares Ortungsgerät nach dem erfindungsgemäßen Verfahren in einer perspektivischen Übersichtsdarstellung.

Das erfindungemäße Messgerät 124 besitzt ein Gehäuse 150, das aus einer oberen und einer unteren Halbschale 152 bzw. 154 gebildet ist. Im Inneren des Gehäuses ist zumindest ein Sensor mit einem Empfangsleiterschleifensystem, beispielsweise einer Spulenanordnung vorgesehen. Weitere Sensoren, wie beispielsweise induktive oder kapazitive Sensoren können ebenfalls im Messgerät 124 integriert sein. Das Messgerät 124 könnte in anderen Ausführungsbeispielen aber auch eine Radarortungsgerät, beispielsweise eine UWB Radar oder auch ein Single Frequency Radar sein.

Das Innere des Messgerätes 124 weist eine entsprechende Signalerzeugungs- und Auswerteelektronik, sowie eine Energieversorgung, bspw. über Batterien oder Akkus, auf. So könnte das System beispielsweise mit einem Li-Ionen Akkupack, insbesondere mit einem 10,8 V Pack betrieben werden. Das Messgerät gemäß Figur 5 besitzt darüber hinaus eine Anzeige/Display 128 zur Ausgabe eines mit dem Messsignal korrelierten Ausgabesignals. Über die Anzeige 128, bspw. eine segmentierte Balkenanzeige oder aber auch eine graphische Anzeige unter Verwendung eines LCDs, ist es möglich, die Stärke des detektierten Messsignals U_{M} darzustellen.

Des Weiteren besitzt das erfindungsgemäße Messgerät ein Bedienfeld 158 mit einer Reihe von Bedienelementen 160, die es ermöglichen, das Gerät beispielsweise ein- bzw. auszuschalten, sowie gegebenenfalls einen Messvorgang bzw. einen Kalibrierungsvorgang zu starten. Über ein Bedienelement 156 kann es einem Anwender beispielsweise ermöglicht werden, die Frequenz des Messsignals zu variieren. Darüber hinaus kann auch vorgesehen sein, dass diese Variation der Messfrequenz vom Gerät automatisch vorgenommen wird und insbesondere einem Anwender nicht zugänglich ist.

Im Bereich unterhalb des Bedienfeldes 158 weist das Messgerät gemäß Figur 5 einen Bereich 162 auf, der in seiner Form und Materialgestaltung als Handgriff 164 zur Führung des erfindungsgemäßen Messgerätes ausgestaltet ist. Mittels dieses Handgriffs 164 wird das Messgerät mit seiner, dem Betrachter der Figur 5 abgekehrten Unterseite über eine Oberfläche eines zu untersuchenden Gegenstandes bzw. eines Mediums, wie beispielsweise der Oberfläche 26 einer Wand 10 gemäß der schematischen Darstellung in Figur 3, geführt.

Auf der dem Handgriff 164 entgegensetzten Seite 170 des Messgerätes 124 weist dieses eine das Gehäuse durchdringende Öffnung 172 auf. Die Öffnung 172 ist konzentrisch zumindest zu dem Empfangsleiterschleifensystem 134 des Sensors angeordnet. Auf diese Weise entspricht der Ort der Öffnung 172 im Messgerät, dem Zentrum des Ortungssensors, sodass dem Anwender eines derartigen Gerätes damit auch gleichzeitig die genaue Lage eines evtl. detektierten Gegenstandes angezeigt wird. Gleichzeitig ist es einem Anwender ermöglicht, mittels dieser Öffnung die genaue Lage eines einmal lokalisierten Objektes auf dem Untergrund, wie beispielsweise der untersuchten Wandoberfläche, zu markieren, indem er ein Markierungsmittel durch die Öffnung hindurch führt. Darüber hinaus weist das Messgerät zusätzlich auf seiner Oberseite Markierungslinien 174 auf, über die das genaue Zentrum der Öffnung 172 und somit die Lage eines eingeschlossenen Gegenstandes vom Anwender lokalisiert werden kann.

Die Öffnung 172 wird begrenzt durch eine teiltransparente Hülse 176, in die das Licht unterschiedlicher Leuchtdioden eingespeist werden kann. Detektiert das Messgerät ein Messsignal U_{M}, aus welchem nach dem beschriebenen Verfahren ein Zustandssignal Z=a oder Z=b oder Z=c generiert wird, so kann die Hülse beispielsweise rot beleuchtet werden, um einem Anwender mitzuteilen, dass ein Objekt am Ort der Öffnung 172 lokalisiert worden ist (Z=a) und er daher beispielsweise von einer Bohrung an dieser Stelle absehen sollte. Wird mit dem erfindungsgemäßen Verfahren ein Signal gemäß dem Zustand Z=b (*"kein Objekt detektiert")* generiert, so kann beispielsweise grünes Licht in die Hülse eingespeist werden, um einem Anwender zu signalisieren, dass kein Objekt lokalisiert worden ist und er beispielsweise eine Bohrung im Bereich der Öffnung 172 des Messgerätes sicher vornehmen kann. Wird mit dem erfindungsgemäßen Verfahren ein Signal gemäß dem Zustand Z=c (*"Objekt in der Nähe*") generiert, so kann beispielsweise gelbes Licht in die Hülse eingespeist werden, um einem Anwender zu signalisieren, dass an der aktuellen Position zwar kein Objekt direkt lokalisiert worden ist, er am mit einem Objekt in der Nähe zu rechnen hat und daher eine erhöhte Vorsicht geboten ist. Zur farblichen Codierung der drei Zustände Z=a,b,c können drei verschiedene Lichtquellen, beispielsweise farbige Dioden genutzt werden, oder es kann auch jeweils ein Mischsignal erzeugt werden. Auch könnte anstelle einer Hülse drei konzentrische Hülsen verwendet werden.

Auch ist es möglich, das Messgerät ohne eine solche Öffnung zu versehen und lediglich eine oder mehrere farbgebende Leuchtmittel im oder am Gehäuse vorzusehen. In einer solchen alternativen Ausführungsform des erfindungsgemäßen Messgerätes kann die Wiedergabe des Zustands Z auch direkt über Ausgabemittel erfolgen, wie beispielsweise Leuchtdioden, die sichtbar im oder am Gehäuse des Messgerätes angeordnet sind.

Weitere Möglichkeiten den jeweiligen Zustand des Detektionssystems einem Anwender/ Benutzer zu übermitteln, sind in den Vorteilen der Erfindung detailliert dargelegt und sollen an dieser Stelle nicht nochmals wiederholt werden.

Das erfindungsgemäße Verfahren bzw. ein nach diesem Verfahren arbeitendes Messgerät ist nicht auf die in den Figuren dargestellten Ausführungsbeispiele beschränkt.

Insbesondere ist das erfindungsgemäße Verfahren nicht beschränkt auf die Verwendung lediglich einer Sendespule bzw. eines Empfangsleiterschleifensystems. Mehrfachsysteme sind ebenso möglich. Ein solches Ortungsgerät könnte beispielsweise auch einen Kompensationssensor auf. Ein derartiger Sensor umfasst bspw. drei Spulen, wobei eine erste Sendespule an einem ersten Sender angeschlossen ist, eine gegebenenfalls vorhandene zweite Sendespule an einem zweiten Sender angeschlossen ist und ein als Empfangsspule dienendes Empfangsleiterschleifensystem an einem Empfänger angeschlossen ist. Die beiden Sendespulen werden von ihren Sendern mit Wechselströmen einer Frequenz f_{M} sowie entgegen gesetzter Phase gespeist. Dabei induziert die erste Sendespule in der Empfangsspule einen Fluss, der dem von der zweiten Sendespule in der Empfangsspule induzierten Fluss entgegengesetzt ist. Beide in der Empfangsspule induzierten Flüsse kompensieren sich somit gegenseitig, sodass der Empfänger keinerlei Empfangssignal in der Empfangsspule detektiert, falls sich kein externer metallischer Gegenstand in der Nähe einer solchen Spulenanordnung befindet. Der von den einzelnen Sendespulen in der Empfangsspule erregte Fluss Φ hängt von verschiedenen Größen, wie beispielsweise der Windungszahl und der Geometrie der Spulen sowie von Amplituden der in den beiden Sendespulen eingespeisten Ströme und ihrer gegenseitigen Phasenlage ab. Diese Größen sind bei derartigen Detektoren letztendlich so zu optimieren, dass bei Abwesenheit eines metallischen Gegenstandes in der Empfangsspule ein möglichst geringer Fluss Φ angeregt wird.

Alternativ ist es auch möglich, nur eine Sendespule zu verwenden und das Empfangswindungssystem derart im Raum zu positionieren, dass bei Abwesenheit metallischer Objekte in den Empfangsleiterstrukturen keine Spannung induziert wird.

Das erfindungsgemäße Messgerät könnte in anderen Ausführungsbeispielen aber auch ein kapazitives Ortungsgerät oder auch ein Radarortungsgerät, beispielsweise eine UWB Radar oder auch ein Single Frequency Radar sein.

Auch die Kombination mehrerer Sensoren in einem Messgerät ist möglich.

Darüber hinaus ist es auch möglich und vorteilhaft, einen Sensor nach dem erfindungsgemäßen Verfahren direkt oder als Anbauteil in eine Werkzeugmaschine, bspw. in ein Bohrwerkzeug zu integrieren, um einen Anwender ein sicheres Arbeiten mit dieser Maschine zu ermöglichen.

## Patentansprüche

1. Verfahren zur Lokalisierung von in einem Medium (10) eingeschlossenen Objekten (12), bei dem ein mit dem eingeschlossenen Objekt (12) korreliertes Messsignal (U_{M}) mittels zumindest eines, insbesondere mindestens ein Empfangsleiterschleifensystem aufweisenden, Sensors generiert wird, aus welchem ein Zustandssignal (Z) zur Übermittlung an einen Anwender erzeugt wird, welches zumindest eine Unterscheidung zwischen einem ersten Zustand (Z=a) "Objekt detektiert", zumindest einem zweiten Zustand (Z=b) "kein Objekt detektiert" und einem dritter Zustand (Z=c) "Objekt in der Nähe" ermöglicht, wobei von dem dritten Zustand *"Objekt in der Nähe"* (Z=c) auf den zweiten Zustand *"kein Objekt detektiert"* (Z=b) gewechselt wird, falls die Größe des aktuell gemessenen Messsignals (U_{M}) einen vorgebbaren ersten Schwellwert (U_{S1}) unterschreitet, **dadurch gekennzeichnet, dass** von dem ersten Zustand "Objekt *detektiert"* (Z=a) auf den dritten Zustand "Objekt in der Nähe" (Z=c) gewechselt wird, falls die Größe des aktuell gemessenen Messsignals (U_{M}) einen zuvor gemessenen, lokalen Maximalwert (U_{Max,n}) des Messsignals um einen vorgegebenen ersten Prozentsatz P₁ unterschreitet, und der erste Schwellwert (U_{S1}) gleich dem Rauschsignalniveau (U_{SR}) des Detektions-systems ist.

2. Verfahren nach Anspruch 1, **dadurch gekennzeichnet, dass** genau drei Zustände Z (Z=a oder Z=b oder Z=c), insbesondere genau drei diskrete Zustände Z, vorgesehen sind.

3. Verfahren nach Anspruch 1 oder 2, **dadurch gekennzeichnet, dass** von dem zweiten Zustand *"kein Objekt detektiert"* (Z=b) auf den dritten Zustand *"Objekt in der Nähe"* (Z=c) gewechselt wird, falls die Größe des aktuell gemessenen Messsignals (U_{M}) den vorgebbaren ersten Schwellwert (U_{S1}) überschreitet.

4. Verfahren nach zumindest einem der vorhergehenden Ansprüche, **dadurch gekennzeichnet, dass** von dem dritten Zustand *"Objekt in der Nähe"* (Z=c) auf den ersten Zustand *"Objekt detektiert"* (Z=a) gewechselt wird, falls die Größe des aktuell gemessenen Messsignals (U_{M}) einen vorgebbaren zweiten Schwellwert (U_{U2}) überschreitet.

5. Verfahren nach zumindest einem der vorhergehenden Ansprüche 1 bis 4, **dadurch gekennzeichnet, dass** von dem dritten Zustand *"Objekt in der Nähe"* (Z=c) auf den ersten Zustand (Z=a) *"Objekt detektiert" gewechselt* wird*,* falls die Größe des aktuell gemessenen Messsignals (U_{M}) einen zuvor gemessenen, lokalen Minimalwert (U_{Min,n}) des Messsignals um einen vorgegeben zweiten Prozentsatz P₂ überschreitet.

6. Verfahren nach Anspruch 5, **dadurch gekennzeichnet, dass** der vorgegebene zweite Prozentsatz P₂ kleiner ist als der vorgegebene erste Prozentsatz P₁.

7. Verfahren nach einem der vorhergehenden Ansprüche, **dadurch gekennzeichnet, dass** die Übermittlung eines Zustandes Z (Z=a, Z=b, Z=c) an einen Anwender mittels eines Farbcodes, insbesondere mittels unterschiedlicher Farben, erfolgt.

8. Verfahren nach Anspruch 7, **dadurch gekennzeichnet, dass** die Übermittlung eines Zustandes Z (Z=a, Z=b, Z=c) an einen Anwender mittels dreier unterschiedlicher Farben erfolgt.

9. Verfahren nach einem der vorhergehenden Ansprüche 7 oder 8, **dadurch gekennzeichnet, dass** dem Zustand *"Objekt in der Nähe"* (Z=c) ein gelber Farbton zugeordnet ist.

10. Verfahren nach einem der vorhergehenden Ansprüche, **dadurch gekennzeichnet, dass** das Messsignal (U_{M}) als Funktion einer lateralen Verschiebung (X) eines Sensors gemessen wird.

11. Messgerät, insbesondere ein handhaltbares Ortungsgerät (24,124), zur Lokalisierung von in einem Medium (10) eingeschlossenen Objekten (12), aufweisend eine Signalerzeugungselektronik;
eine Auswerteelektronik, und
Ausgabemittel (28, 38, 176),
wobei die Signalerzeugungselektronik einen Empfangsleiterschleifen aufweisenden Sensor aufweist, und zumindest dazu ausgebildet ist, ein mit dem eingeschlossenen Objekt (12) korreliertes Messsignal (U_{M}) mittels des Sensors zu generieren,
die Auswerteelektronik zumindest dazu ausgebildet ist, ein Zustandssignal (Z) zur Übermittlung an einen Anwender, anhand des Messignals (U_{M}) zu erzeugen, wobei das Zustandssignal (Z) zumindest eine Unterscheidung zwischen einem ersten Zustand (Z=a) "Objekt detektiert", zumindest einem zweiten Zustand (Z=b) "kein Objekt detektiert" und einem dritten Zustand (Z=c) "Objekt in der Nähe" ermöglicht, und
die Ausgabemittel (28, 38, 176) dazu ausgebildet sind, das jeweils gemessene Zustandssignal (Z) wiederzugeben,
wobei die Auswerteelektronik dazu ausgebildet ist, von dem dritten Zustand "Objekt in der Nähe" (Z=c) auf den zweiten Zustand "kein Objekt detektiert" (Z=b) zu wechseln, falls die Größe des aktuell gemessenen Messsignal (U_{M}) einen vorgebbaren ersten Schwellwert (U_{S1}) unterscheidet,
**dadurch gekennzeichnet, dass**
die Auswerteelektronik weiter dazu ausgebildet ist, von dem ersten Zustand "Objekt detektiert" (Z=a) auf den dritten Zustand "Objekt in der Nähe" (Z=c) zu wechseln, falls die Größe des aktuell gemessenen Messsignal (U_{M}) einen zuvor gemessenen, lokalen Maximalwert (U_{Max,n}) des Messsignals um einen vorgegebenen ersten Prozentsatz P₁ unterschreitet und der erste Schwellwert (U_{S1}) das Signalrauschniveau des Detektionssystems ist.

12. Messgerät nach Anspruch 11, **dadurch gekennzeichnet, dass** die Wiedergabe des Zustands Z (Z=a, Z=b, Z=c) optisch erfolgt.

13. Messgerät nach Anspruch 12, **dadurch gekennzeichnet, dass** die Wiedergabe des Zustands Z (Z=a, Z=b, Z=c) mittels dreier unterschiedlicher Farben erfolgt.

14. Messgerät nach einem der vorhergehenden Ansprüche 11 bis 13, **dadurch gekennzeichnet, dass** das Messgerät (24,124) über zumindest einen Sensor mit mindestens einem Antennenelement, insbesondere ein UWB-Antennen-element verfügt.

## Claims

1. Method for localizing objects (12) enclosed in a medium (10), in which a measurement signal (U_{M}) correlated with the enclosed object (12) is generated by means of at least one sensor, in particular having at least one receive wire loop system, from which a state signal (Z) for the purpose of transmission to a user is generated, which enables at least a distinction to be made between a first state (Z=a) "object detected", at least one second state (Z=b) "no object detected" and a third state (Z=c) "object in the vicinity", wherein the system changes from the third state *"object in the vicinity"* (Z=c) to the second state *"no object detected"* (Z=b) if the magnitude of the measurement signal (U_{M}) currently measured stays below a predeterminable first threshold value (U_{S1}), **characterized in that** the system changes from the first state "object detected" (Z=a) to the third state "object in the vicinity" (Z=c) if the magnitude of the measurement signal (U_{M}) currently measured stays below a previously measured local maximum value (U_{Max,n}) of the measurement signal by a predetermined first percentage P₁, and the first threshold value (U_{S1}) is equal to the signal-to-noise ratio (U_{SR}) of the detection system.

2. Method according to Claim 1, **characterized in that** precisely three states Z (Z=a or Z=b or Z=c), in particular precisely three discrete states Z, are provided.

3. Method according to Claim 1 or 2, **characterized in that** the system changes from the second state *"no object detected'* (Z=b) to the third state *"object in the vicinity"* (Z=c) if the magnitude of the measurement signal (U_{M}) currently measured exceeds the predeterminable first threshold value (U_{S1}).

4. Method according to at least one of the preceding claims, **characterized in that** the system changes from the third state *"object in the vicinity"* (Z=c) to the first state *"object detected"* (Z=a) if the magnitude of the measurement signal (U_{M}) currently measured exceeds a predeterminable second threshold value (U_{U2}).

5. Method according to at least one of the preceding Claims 1 to 4, **characterized in that** the system changes from the third state *"object in the vicinity"* (Z=c) to the first state (Z=a) *"object detected'* if the magnitude of the measurement signal (U_{M}) currently measured exceeds a previously measured local minimum value (U_{Min,n}) of the measurement signal by a predetermined second percentage P₂.

6. Method according to Claim 5, **characterized in that** the predetermined second percentage P₂ is smaller than the predetermined first percentage P₁.

7. Method according to any one of the preceding claims, **characterized in that** a state Z (Z=a, Z=b, Z=c) is transmitted to a user by means of a colour code, in particular by means of different colours.

8. Method according to Claim 7, **characterized in that** a state Z (Z=a, Z=b, Z=c) is transmitted to a user by means of three different colours.

9. Method according to either one of the preceding Claims 7 and 8, **characterized in that** a yellow colour shade is assigned to the state *"object in the vicinity"* (Z=c).

10. Method according to any one of the preceding claims, **characterized in that** the measurement signal (U_{M}) is measured as a function of a lateral shift (X) of a sensor.

11. Measuring device, in particular a hand-held positioning device (24, 124) for localizing objects (12) enclosed in a medium (10), having signal generating electronics;
evaluating electronics, and
output means (28, 38, 176),
wherein the signal generating electronics have a sensor having receive wire loop systems, and is at least designed to use the sensor to generate a measurement signal (U_{M}) correlated with the enclosed object (12),
the evaluating electronics are designed to use the measurement signal (U_{M}) to generate a state signal (Z) for the purpose of transmission to a user, wherein the state signal (Z) enables at least a distinction to be made between a first state (Z=a) "object detected", at least one second state (Z=b) "no object detected" and a third state (Z=c) "object in the vicinity", and
the output means (28, 38, 176) are designed to reproduce the respective measured state signal (Z),
wherein the evaluating electronics are designed to change from the third state "object in the vicinity" (Z=c) to the second state "no object detected" (Z=b) if the magnitude of the measurement signal (U_{M}) currently measured distinguishes a predeterminable first threshold value (U_{S1}),
**characterized in that**
the evaluating electronics are further designed to change from the first state "object detected" (Z=a) to the third state "object in the vicinity" (Z=c) if the magnitude of the measurement signal (U_{M}) currently measured stays below a previously measured local maximum value (U_{Max,n}) of the measurement signal by a predetermined first percentage P₁ and the first threshold value (U_{S1}) is the signal-to-noise ratio of the detection system.

12. Measuring device according to Claim 11, **characterized in that** the state Z (Z=a, Z=b, Z=c) is reproduced optically.

13. Measuring device according to Claim 12, **characterized in that** the state Z (Z=a, Z=b, Z=c) is reproduced by means of three different colours.

14. Measuring device according to any one of the preceding Claims 11 to 13, **characterized in that** the measuring device (24, 124) has at least one sensor having at least one antenna element, in particular a UWB antenna element.

## Revendications

1. Procédé pour localiser des objets (12) inclus dans un milieu (10), selon lequel un signal de mesure (U_{M}) corrélé avec l'objet inclus (12) est généré au moyen d'au moins un capteur comportant notamment au moins un système à boucles conductrices de réception, à partir duquel est produit un signal d'état (Z) à transmettre à un utilisateur, lequel permet au moins une distinction entre un premier état (Z=a) "Objet détecté", au moins un deuxième état (Z=b) "Aucun objet détecté" et un troisième état (Z=c) "Objet à proximité", dans lequel un passage du troisième état *"Objet à proximité"* (Z=c) au deuxième état *"Aucun objet détecté"* (Z=b) se produit dans le cas où la grandeur du signal de mesure actuellement mesuré (U_{M}) est inférieure à une première valeur de seuil prédéfinissable (U_{S1}), **caractérisé en ce qu'**un passage du premier état "Objet détecté" (Z=a) au troisième état "Objet à proximité" (Z=c) se produit dans le cas où la grandeur du signal de mesure actuellement mesuré (U_{M}) est inférieure à une valeur maximale locale précédemment mesurée (U_{Max,n}) du signal de mesure d'un premier pourcentage prédéfini P₁, et la première valeur de seuil (U_{S1}) est égale au niveau du signal de bruit (U_{SR}) du système de détection.

2. Procédé selon la revendication 1, **caractérisé en ce qu'**exactement trois états Z (Z=a ou Z=b ou Z=c), notamment exactement trois états discrets Z, sont prévus.

3. Procédé selon la revendication 1 ou 2, **caractérisé en ce qu'**un passage du deuxième état *"Aucun objet détecté"* (Z=b) au troisième état *"Objet à proximité"* (Z=c) se produit dans le cas où la grandeur du signal de mesure actuellement mesuré (U_{M}) dépasse la première valeur de seuil prédéfinissable (U_{S1}).

4. Procédé selon au moins l'une des revendications précédentes, **caractérisé en ce qu'**un passage du troisième état *"Objet à proximité"* (Z=c) au premier état *"Objet détecté"* (Z=a) se produit dans le cas où la grandeur du signal de mesure actuellement mesuré (U_{M}) dépasse une deuxième valeur de seuil prédéfinissable (U_{U2}).

5. Procédé selon au moins l'une des revendications 1 à 4 précédentes, **caractérisé en ce qu'**un passage du troisième état *"Objet à proximité"* (Z=c) au premier état (Z=a) *"Objet détecté"* se produit dans le cas où la grandeur du signal de mesure actuellement mesuré (U_{M}) dépasse une valeur minimale locale précédemment mesurée (U_{Min,n}) du signal de mesure d'un deuxième pourcentage P₂ prédéfini.

6. Procédé selon la revendication 5, **caractérisé en ce que** le deuxième pourcentage prédéfini P₂ est inférieur au premier pourcentage prédéfini P₁.

7. Procédé selon l'une des revendications précédentes, **caractérisé en ce que** la transmission d'un état Z (Z=a, Z=b, Z=c) à un utilisateur est effectuée au moyen d'un code couleur, notamment au moyen de différentes couleurs.

8. Procédé selon la revendication 7, **caractérisé en ce que** la transmission d'un état Z (Z=a, Z=b, Z=c) à un utilisateur est effectuée au moyen de trois couleurs différentes.

9. Procédé selon l'une des revendications 7 ou 8 précédentes, **caractérisé en ce qu'**une teinte jaune est associée à l'état *"Objet à proximité"* (Z=c).

10. Procédé selon l'une des revendications précédentes, **caractérisé en ce que** le signal de mesure (U_{M}) est mesuré en fonction d'un déplacement latéral (X) d'un capteur.

11. Appareil de mesure, notamment un appareil de localisation portable (24, 124), pour localiser des objets (12) inclus dans un milieu (10), comportant une électronique de génération de signal ;
une électronique d'évaluation, et
des moyens de sortie (28, 38, 176),
dans lequel l'électronique de génération de signal comporte un capteur comprenant des boucles conductrices de réception, et est conçu au moins pour générer au moyen du capteur un signal de mesure (U_{M}) corrélé avec l'objet inclus (12),
l'électronique d'évaluation est au moins conçue pour produire sur la base du signal de mesure (U_{M}) un signal d'état (Z) destiné à être transmis à un utilisateur, dans lequel le signal d'état (Z) permet au moins d'établir une distinction entre un premier état (Z=a) "Objet détecté", au moins un deuxième état (Z=b) "Aucun objet détecté" et un troisième état (Z=c) "Objet à proximité", et
les moyens de sortie (28, 38, 176) sont conçus pour reproduire le signal d'état (Z) respectivement mesuré,
dans lequel l'électronique d'évaluation est conçue pour passer du troisième état "Objet à proximité" (Z=c) au deuxième état "Aucun objet détecté" (Z=b) dans le cas où la grandeur du signal de mesure actuellement mesuré (U_{M}) distingue une première valeur de seuil prédéfinissable (U_{S1}),
**caractérisé en ce que**
l'électronique d'évaluation est en outre conçue pour passer du premier état "Objet détecté" (Z=a) au troisième état "Objet à proximité" (Z=c) dans le cas où la grandeur du signal de mesure actuellement mesuré (U_{M}) est inférieure à une valeur maximale locale précédemment mesurée (U_{Max,n}) du signal de mesure d'un premier pourcentage P₁ prédéfini et **en ce que** la première valeur de seuil (U_{S1}) est le niveau de bruit de signal du système de détection.

12. Appareil de mesure selon la revendication 11, **caractérisé en ce que** la reproduction de l'état Z (Z=a, Z=b, Z=c) est effectuée de manière optique.

13. Appareil de mesure selon la revendication 12, **caractérisé en ce que** la reproduction de l'état Z (Z=a, Z=b, Z=c) est effectuée au moyen de trois couleurs différentes.

14. Appareil de mesure selon l'une des revendications 11 à 13 précédentes, **caractérisé en ce que** l'appareil de mesure (24, 124) dispose d'au moins un capteur doté d'au moins un élément d'antenne, notamment un élément d'antenne UWB.
